(19) Europäisches Patentamt
European Patent Office
Office européen des brevets

(11) **EP 3 764 556 A1**

(12) **EUROPEAN PATENT APPLICATION**
published in accordance with Art. 153(4) EPC

(43) Date of publication:
**13.01.2021 Bulletin 2021/02**

(51) Int Cl.:
***H04B 3/54*** *(2006.01)*

(21) Application number: **18920078.5**

(22) Date of filing: **25.05.2018**

(86) International application number:
**PCT/CN2018/088507**

(87) International publication number:
**WO 2019/223006 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HUAWEI TECHNOLOGIES CO., LTD. Shenzhen, Guangdong 518129 (CN)**

(72) Inventors:
• **ZENG, Yan**
  **Shenzhen, Guangdong 518129 (CN)**
• **PAN, Dao**
  **Shenzhen, Guangdong 518129 (CN)**

(74) Representative: **Epping - Hermann - Fischer Patentanwaltsgesellschaft mbH Schloßschmidstraße 5 80639 München (DE)**

(54) **DATA FRAME TRANSMISSION METHOD AND APPARATUS BASED ON POWER LINE CHANNEL**

(57) Embodiments of this application relate to the field of power line communication, and disclose a power line channel-based data frame transmission method and an apparatus, to improve utilization of a power line channel. A specific solution is as follows: A sending node sends a data frame in N time windows. A power line channel corresponding to an $i^{th}$ time window is used to transmit an $i^{th}$ data section. The data frame includes first indication information, second indication information, and N data sections. The first indication information is used to indicate that the data frame is a channel-adaptive aggregated data frame. The second indication information includes a parsing parameter used to parse a payload. The N data sections are obtained by dividing to-be-sent data based on physical layer transmission parameters for N time windows, and physical layer transmission parameters for two adjacent time windows are different. The embodiments of this application are used in a power line communication process.

FIG. 5

EP 3 764 556 A1

**Description**

**TECHNICAL FIELD**

Embodiments of this application relate to the field of power line communication, and in particular, to a power line channel-based data frame transmission method and an apparatus.

**BACKGROUND**

A power line communication (power line communication, PLC) technology is a communication manner in which data is transmitted through a power line. In this technology, a baseband signal carrying information is loaded to the power line, to transmit data through the power line. The baseband signal is separated from the power line through a dedicated power line modem, and is transmitted to a terminal device to implement data transmission.

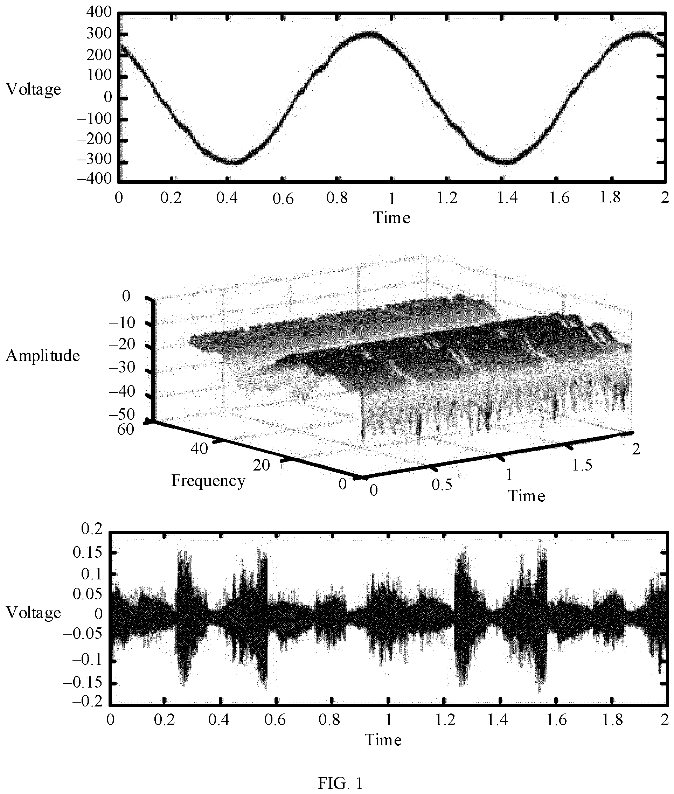

In a power line communication network, especially when a power line communication device (such as a power line communication modem) is used for communication in a home scenario, other household appliances (such as a lamp, an air conditioner, and a television) also work in the same power line network. Because a function of a household appliance determines that the household appliance is not a purely resistive circuit (for example, an electric fan is mainly an electric machine, and a charger is mainly a transformer rectifier), impedance of each power node in the power line communication network varies with time. Therefore, a power line channel is a time-varying channel. Further, the power line channel is a channel that periodically changes with an alternating current (alternating current, AC) cycle, and has similar channel state changes in different alternating current cycles. In addition to a channel response, noise on the power line also periodically changes. FIG. 1 is a schematic diagram of a power line channel response and noise that change with time in the prior art.

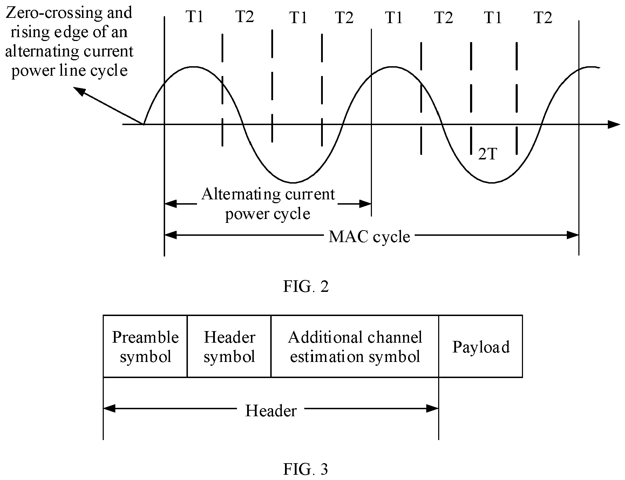

Therefore, to adapt to communication in different channel states in one alternating current cycle, the alternating current cycle may be divided into a plurality of regions. One region corresponds to one channel state. In different regions, different physical layer transmission parameters are used to transmit data frames, to adapt the to-be-transmitted data frames to different channel states. The region may be a bit allocation table (bit allocation table, BAT) region defined in International Telecommunication Union-Telecommunication Standardization Sector (international telecommunication union telecommunication standardization sector, ITU-T) G.9960. In ITU-T G.9960 and G.9961, the bit allocation table region is defined based on a medium access control (medium access control, MAC) cycle, and is negotiated by both a sending node and a receiving node. The MAC cycle is defined as two alternating current cycles. Therefore, the bit allocation table region is also based on periodic change of the power line channel with the alternating current cycle, and ensures MAC resource allocation efficiency. In addition, because a power line channel state continuously changes in one alternating current cycle, one region may include a plurality of discrete time windows. A same physical layer transmission parameter is used to transmit data frames in different time windows in a same region. FIG. 2 is a schematic diagram of division into time windows for a power line channel in the prior art. The division is fixed division based on a channel feature corresponding to an alternating current cycle.

When the power line channel state changes more frequently, there are more time windows, and more individual data frames need to be transmitted in independent time windows. However, each to-be-transmitted data frame includes a header. The header includes a preamble (preamble) symbol (symbols) and a header (header) symbol. The header may further include an additional channel estimation (additional channel estimation, ACE) symbol. Therefore, when a quantity of individual data frames is increased, redundant information (in same headers) is also increased in communication. This reduces utilization of the power line channel. If the power line channel state changes particularly frequently, duration of each time window may be even less than duration for transmitting redundant information. Consequently, even communication cannot be performed.

**SUMMARY**

Embodiments of this application provide a power line channel-based data frame transmission method and an apparatus, to effectively improve utilization of a power line channel by reducing unnecessary redundant information and a quantity of data frames.

To achieve the foregoing objective, the following technical solutions are used in the embodiments of this application.

According to a first aspect of the embodiments of this application, a power line channel-based data frame transmission method is provided, including: When generating a data frame, a sending node divides to-be-sent data into N data sections based on physical layer transmission parameters for N time windows. The N time windows belong to M regions. Each of the M regions includes at least one time window, which may also be understood as that each of the M regions corresponds to one physical layer transmission parameter. It is equivalent that a physical layer transmission parameter for one region corresponds to one power line channel state. Therefore, the physical layer transmission parameters for the N time windows correspond to M power line channel states. The physical layer transmission parameters for the N time windows may be completely or partially different, and physical layer transmission parameters for two adjacent time windows are different. When M is equal to N, it indicates that the channel state does not recur in duration for sending the data frame, and the time windows belong to different regions. When M is less than N, it indicates that at least two non-adjacent time windows in the N time windows belong to a same region and a same physical layer transmission parameter is used to transmit data sections in the at least two non-adjacent time windows. After generating the data frame, the sending node sends the data frame in the N time windows. A power line channel corresponding to an $i^{th}$ time window is used to transmit an $i^{th}$ data section. In addition, the data frame includes not only the N data sections but also a header. The header includes a header symbol. The header symbol includes first indication information and second indication information. The first indication information is used to indicate that the data frame is a channel-adaptive aggregated data frame. The second indication information includes a parsing parameter used to parse the payload. i is an integer, and values of i range from 1 to N. N is an integer greater than or equal to 2, M is an integer greater than or equal to 1, and M is less than or equal to N.

According to the power line channel-based data frame transmission method provided in this embodiment of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of a power line channel.

Specific content included in the parsing parameter may have the following two implementations:

Implementation 1: The parsing parameter includes a quantity of data sections, a quantity of data symbols actually used to carry each data section, and an identifier of a physical layer transmission parameter that is used to transmit each data section in a time window.
Implementation 2: The parsing parameter includes a start moment for sending the data frame.

In this way, a receiving node can parse the data frame based on the parsing parameter, to obtain data transmitted through the data frame.

With reference to the first aspect, in a possible implementation, the payload further includes P transition sections. Each transition section is used to separate two adjacent time windows. P is an integer greater than or equal to 1 and less than or equal to N-1.

Specifically, during actual application, a transition symbol may be used to implement a function of the transition section. In other words, the transition symbol is used to separate two adjacent time windows. A $j^{th}$ transition section includes a transition symbol. j is an integer, and values of j range from 1 to P. The transition symbol included in the $j^{th}$ transition section is a silent symbol, or is a dummy symbol using pseudo-random data, or is a data symbol that is for carrying a data section and that is in a time window adjacent to the $j^{th}$ transition section. Alternatively, a $j^{th}$ transition section is transition duration. The transition section is introduced into the data frame. This effectively avoids a bit error caused by power line channel instability due to power line channel transfer in cross-window transmission, and ensures stability and accuracy of communication.

When the transition section includes a transition symbol, the parsing parameter may further include a quantity of transition sections and a quantity of transition symbols actually used for each transition section.

When the transition section is transition duration, the parsing parameter may further include a quantity of transition sections and transition duration actually used for each transition section.

With reference to the foregoing possible implementation, in another possible implementation, before the sending node generates the data frame, the method further includes: The sending node obtains a start moment and an end moment that correspond to each of the P transition sections. In this way, the sending node can determine each of the P transition sections based on the start moment and the end moment that correspond to the transition section. Alternatively, the sending node obtains a quantity of transition symbols included in each of the P transition sections.

In addition, before the sending node generates the data frame, the method further includes: The sending node obtains a start moment, an end moment, and a physical layer transmission parameter that correspond to each of the N time windows.

With reference to the foregoing possible implementations, that the to-be-sent data is divided into the N data sections based on the physical layer transmission parameters for the N time windows includes the following possible implementation. Before the sending node generates the data frame, the method further includes: The sending node first determines an $i^{th}$ target symbol quantity based on an $i^{th}$ piece of to-be-sent data and a physical layer transmission parameter for the $i^{th}$ time window, and determines an $i^{th}$ original symbol quantity. Then, the sending node determines whether the $i^{th}$ target symbol quantity is less than or equal to the $i^{th}$ original symbol quantity. If the $i^{th}$ target symbol quantity is less than or equal to the $i^{th}$ original symbol quantity, the sending node determines the $i^{th}$ target symbol quantity as an $i^{th}$ actual symbol quantity. If the $i^{th}$ target symbol quantity is greater than the $i^{th}$ original symbol quantity, the sending node determines the $i^{th}$ original symbol quantity as an $i^{th}$ actual symbol quantity. Finally, the sending node determines the $i^{th}$ data section based on the physical layer transmission parameter for the $i^{th}$ time window and the $i^{th}$ actual symbol quantity. The $i^{th}$ piece of to-be-sent data is the to-be-sent data or a part of the to-be-sent data. The $i^{th}$ target symbol quantity is a quantity of data symbols that need to be used to carry the $i^{th}$ piece of to-be-sent data when the sending node sends the $i^{th}$ piece of to-be-sent data. The $i^{th}$ original symbol quantity is a quantity of data symbols that can be transmitted in duration from a start moment for sending the $i^{th}$ piece of to-be-sent data to an end moment of the $i^{th}$ time window. The $i^{th}$ actual symbol quantity is a quantity of data symbols actually used to carry the $i^{th}$ data section when the $i^{th}$ data section is sent.

That the sending node determines the $i^{th}$ original symbol quantity specifically includes: The sending node first obtains the start moment for sending the $i^{th}$ piece of to-be-sent data and the end moment of the $i^{th}$ time window; obtains, based on the start moment for sending the $i^{th}$ piece of to-be-sent data and the end moment of the $i^{th}$ time window, available duration for sending the $i^{th}$ piece of to-be-sent data; and determines the $i^{th}$ original symbol quantity based on the available duration for sending the $i^{th}$ piece of to-be-sent data and duration of a data symbol. The available duration for sending the $i^{th}$ piece of to-be-sent data is a difference between the start moment for sending the $i^{th}$ piece of to-be-sent data and the end moment of the $i^{th}$ time window. The data symbol is a symbol that is for transmitting the $i^{th}$ piece of to-be-sent data and that is in the $i^{th}$ time window.

Particularly, when i=1, that the sending node determines the $i^{th}$ original symbol quantity based on the available duration for sending the $i^{th}$ piece of to-be-sent data and the duration of the data symbol specifically includes: The sending node determines the $i^{th}$ original symbol quantity based on the available duration for sending the $i^{th}$ piece of to-be-sent data, duration for sending the header, and the duration of the data symbol.

According to a second aspect of the embodiments of this application, a power line channel-based data frame transmission method is provided, including: After receiving a data frame, a receiving node parses the data frame to obtain data transmitted through the data frame. The data frame includes a header and a payload. The header includes a header symbol. The header symbol includes first indication information and second indication information. The first indication information is used to indicate that the data frame is a channel-adaptive aggregated data frame. The second indication information includes a parsing parameter used to parse the payload. The payload includes N data sections. The N data sections are obtained by dividing the to-be-sent data based on physical layer transmission parameters for N time windows. The N time windows belong to M regions. Each of the M regions corresponds to one physical layer transmission parameter. One region includes at least one time window. Physical layer transmission parameters for two adjacent time windows are different. N is an integer greater than or equal to 2, M is an integer greater than or equal to 1, and M is less than or equal to N.

According to the power line channel-based data frame transmission method provided in this embodiment of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of a power line channel.

Specific content included in the parsing parameter may have the following two implementations:

Implementation 1: The parsing parameter includes a quantity of data sections, a quantity of data symbols actually used to carry each data section, and an identifier of a physical layer transmission parameter that is used to transmit each data section in a time window.

Implementation 2: The parsing parameter includes a start moment for sending the data frame.

In this way, the receiving node can parse the data frame based on the parsing parameter, to obtain data transmitted through the data frame.

With reference to the second aspect, in a possible implementation, the payload further includes P transition sections. Each transition section is used to separate two adjacent time windows. P is an integer greater than or equal to 1 and less than or equal to N-1.

Specifically, during actual application, a transition symbol may be used to implement a function of the transition section. In other words, the transition symbol is used to separate two adjacent time windows. A $j^{th}$ transition section includes a transition symbol. j is an integer, and values of j range from 1 to P. The transition symbol included in the $j^{th}$ transition section is a silent symbol, or is a dummy symbol using pseudo-random data, or is a data symbol that is for carrying a data section and that is in a time window adjacent to the $j^{th}$ transition section. Alternatively, a $j^{th}$ transition section is transition duration. The transition section is introduced into the data frame. This effectively avoids a bit error caused by power line channel instability due to power line channel transfer in cross-window transmission, and ensures stability and accuracy of communication.

When the transition section includes a transition symbol, the parsing parameter may further include a quantity of transition sections and a quantity of transition symbols actually used for each transition section.

When the transition section is transition duration, the parsing parameter may further include a quantity of transition sections and transition duration actually used for each transition section.

With reference to the foregoing possible implementation, in another possible implementation, before the receiving node receives the data frame, the method further includes: The receiving node sends a start moment and an end moment that correspond to each of the P transition sections. In this way, a sending node can determine each of the P transition sections based on the start moment and the end moment that correspond to the transition section. Alternatively, the receiving node sends a quantity of transition symbols included in each of the P transition sections.

In addition, before the receiving node receives the data frame, the method further includes: The receiving node sends a start moment, an end moment, and a physical layer transmission parameter that correspond to each of the N time windows.

According to a third aspect of the embodiments of this application, a sending node is provided, including a processing unit and a sending unit. The processing unit is configured to: when generating a data frame, divide to-be-sent data into N data sections based on physical layer transmission parameters for N time windows. The N time windows belong to M regions. Each of the M regions includes at least one time window, which may also be understood as that each of the M regions corresponds to one physical layer transmission parameter. It is equivalent that a physical layer transmission parameter for one region corresponds to one power line channel state. Therefore, the physical layer transmission parameters for the N time windows correspond to M power line channel states. The physical layer transmission parameters for the N time windows may be completely or partially different, and physical layer transmission parameters for two adjacent time windows are different. When M is equal to N, it indicates that the channel state does not recur in duration for sending the data frame, and the time windows belong to different regions. When M is less than N, it indicates that at least two non-adjacent time windows in the N time windows belong to a same region and a same physical layer transmission parameter is used to transmit data sections in the at least two non-adjacent time windows. The sending unit is configured to: after the data frame is generated, send the data frame in the N time windows. A power line channel corresponding to an $i^{th}$ time window is used to transmit an $i^{th}$ data section. In addition, the data frame includes not only the N data sections but also a header. The header includes a header symbol. The header symbol includes first indication information and second indication information. The first indication information is used to indicate that the data frame is a channel-adaptive aggregated data frame. The second indication information includes a parsing parameter used to parse the payload. i is an integer, and values of i range from 1 to N. N is an integer greater than or equal to 2, M is an integer greater than or equal to 1, and M is less than or equal to N.

According to a power line channel-based data frame transmission method provided in the embodiments of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of a power line channel.

Specific content included in the parsing parameter may have the following two implementations:

Implementation 1: The parsing parameter includes a quantity of data sections, a quantity of data symbols actually used to carry each data section, and an identifier of a physical layer transmission parameter that is used to transmit each data section in a time window.

Implementation 2: The parsing parameter includes a start moment for sending the data frame.

In this way, a receiving node can parse the data frame based on the parsing parameter, to obtain data transmitted through the data frame.

With reference to the third aspect, in a possible implementation, the payload further includes P transition sections. Each transition section is used to separate two adjacent time windows. P is an integer greater than or equal to 1 and less than or equal to N-1.

Specifically, during actual application, a transition symbol may be used to implement a function of the transition section. In other words, the transition symbol is used to separate two adjacent time windows. A $j^{th}$ transition section includes a transition symbol. j is an integer, and values of j range from 1 to P. The transition symbol included in the $j^{th}$ transition section is a silent symbol, or is a dummy symbol using pseudo-random data, or is a data symbol that is for carrying a data section and that is in a time window adjacent to the $j^{th}$ transition section. Alternatively, a $j^{th}$ transition section is transition duration. The transition section is introduced into the data frame. This effectively avoids a bit error caused by power line channel instability due to power line channel transfer in cross-window transmission, and ensures stability and accuracy of communication.

When the transition section includes a transition symbol, the parsing parameter may further include a quantity of transition sections and a quantity of transition symbols actually used for each transition section.

When the transition section is transition duration, the parsing parameter may further include a quantity of transition sections and transition duration actually used for each transition section.

With reference to the foregoing possible implementation, in another possible implementation, the sending node further includes a receiving unit. The receiving unit is configured to obtain a start moment and an end moment that correspond to each of the P transition sections. In this way, the sending node can determine each of the P transition sections based on the start moment and the end moment that correspond to the transition section. Alternatively, the receiving unit is configured to obtain a quantity of transition symbols included in each of the P transition sections.

In addition, the receiving unit is further configured to obtain a start moment, an end moment, and a physical layer transmission parameter that correspond to each of the N time windows.

With reference to the foregoing possible implementations, that the processing unit divides the to-be-sent data into the N data sections based on the physical layer transmission parameters for the N time windows includes the following possible implementation. The processing unit is specifically configured to: first determine an $i^{th}$ target symbol quantity based on an $i^{th}$ piece of to-be-sent data and a physical layer transmission parameter for the $i^{th}$ time window, and determines an $i^{th}$ original symbol quantity; then determine whether the $i^{th}$ target symbol quantity is less than or equal to the $i^{th}$ original symbol quantity; if the $i^{th}$ target symbol quantity is less than or equal to the $i^{th}$ original symbol quantity, determine the $i^{th}$ target symbol quantity as an $i^{th}$ actual symbol quantity; or if the $i^{th}$ target symbol quantity is greater than the $i^{th}$ original symbol quantity, determine the $i^{th}$ original symbol quantity as an $i^{th}$ actual symbol quantity; and finally, determine the $i^{th}$ data section based on the physical layer transmission parameter for the $i^{th}$ time window and the $i^{th}$ actual symbol quantity. The $i^{th}$ piece of to-be-sent data is the to-be-sent data or a part of the to-be-sent data. The $i^{th}$ target symbol quantity is a quantity of data symbols that need to be used to carry the $i^{th}$ piece of to-be-sent data when the sending node sends the $i^{th}$ piece of to-be-sent data. The $i^{th}$ original symbol quantity is a quantity of data symbols that can be transmitted in duration from a start moment for sending the $i^{th}$ piece of to-be-sent data to an end moment of the $i^{th}$ time window. The $i^{th}$ actual symbol quantity is a quantity of data symbols actually used to carry the $i^{th}$ data section when the $i^{th}$ data section is sent.

That the processing unit determines the $i^{th}$ original symbol quantity specifically includes: The processing unit first obtains the start moment for sending the $i^{th}$ piece of to-be-sent data and the end moment of the $i^{th}$ time window; obtains, based on the start moment for sending the $i^{th}$ piece of to-be-sent data and the end moment of the $i^{th}$ time window, available duration for sending the $i^{th}$ piece of to-be-sent data; and determines the $i^{th}$ original symbol quantity based on the available duration for sending the $i^{th}$ piece of to-be-sent data and duration of a data symbol. The available duration for sending the $i^{th}$ piece of to-be-sent data is a difference between the start moment for sending the $i^{th}$ piece of to-be-sent data and the end moment of the $i^{th}$ time window. The data symbol is a symbol that is for transmitting the $i^{th}$ piece of to-be-sent data and that is in the $i^{th}$ time window.

Particularly, when i=1, that the processing unit determines the $i^{th}$ original symbol quantity based on the available duration for sending the $i^{th}$ piece of to-be-sent data and the duration of the data symbol specifically includes: The processing unit determines the $i^{th}$ original symbol quantity based on the available duration for sending the $i^{th}$ piece of to-be-sent data, duration for sending the header, and the duration of the data symbol.

According to a fourth aspect of the embodiments of this application, a receiving node is provided, including a receiving unit and a processing unit. The receiving unit is configured to receive a data frame. The processing unit is configured to parse the data frame to obtain data transmitted through the data frame. The data frame includes a header and a payload. The header includes a header symbol. The header symbol includes first indication information and second indication information. The first indication information is used to indicate that the data frame is a channel-adaptive aggregated data frame. The second indication information includes a parsing parameter used to parse the payload. The payload includes N data sections. The N data sections are obtained by dividing the to-be-sent data based on physical layer transmission parameters for N time windows. The N time windows belong to M regions. Each of the M regions corresponds to one physical layer transmission parameter. One region includes at least one time window. Physical layer transmission parameters for two adjacent time windows are different. N is an integer greater than or equal to 2, M is an integer greater than or equal to 1, and M is less than or equal to N.

According to a power line channel-based data frame transmission method provided in the embodiments of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of a power line channel.

Specific content included in the parsing parameter may have the following two implementations:

> Implementation 1: The parsing parameter includes a quantity of data sections, a quantity of data symbols actually used to carry each data section, and an identifier of a physical layer transmission parameter that is used to transmit each data section in a time window.
>
> Implementation 2: The parsing parameter includes a start moment for sending the data frame.

In this way, the receiving node can parse the data frame based on the parsing parameter, to obtain data transmitted through the data frame.

With reference to the fourth aspect, in a possible implementation, the payload further includes P transition sections. Each transition section is used to separate two adjacent time windows. P is an integer greater than or equal to 1 and less than or equal to N-1.

Specifically, during actual application, a transition symbol may be used to implement a function of the transition section. In other words, the transition symbol is used to separate two adjacent time windows. A $j^{th}$ transition section includes a transition symbol. j is an integer, and values of j range from 1 to P. The transition symbol included in the j<sup>th</sup> transition section is a silent symbol, or is a dummy symbol using pseudo-random data, or is a data symbol that is for carrying a data section and that is in a time window adjacent to the j<sup>th</sup> transition section. Alternatively, a j<sup>th</sup> transition section is transition duration. The transition section is introduced into the data frame. This effectively avoids a bit error caused by power line channel instability due to power line channel transfer in cross-window transmission, and ensures stability and accuracy of communication.

When the transition section includes a transition symbol, the parsing parameter may further include a quantity of transition sections and a quantity of transition symbols actually used for each transition section.

When the transition section is transition duration, the parsing parameter may further include a quantity of transition sections and transition duration actually used for each transition section.

With reference to the foregoing possible implementation, in another possible implementation, the receiving node further includes a sending unit. The sending unit is configured to send a start moment and an end moment that correspond to each of the P transition sections. In this way, a sending node can determine each of the P transition sections based on the start moment and the end moment that correspond to the transition section. Alternatively, the sending unit is configured to send a quantity of transition symbols included in each of the P transition sections.

In addition, the sending unit is further configured to send a start moment, an end moment, and a physical layer transmission parameter that correspond to each of the N time windows.

It should be noted that, the functional modules in the third aspect and the fourth aspect may be implemented by hardware, or may be implemented by hardware executing corresponding software. The hardware or software includes one or more modules corresponding to the foregoing functions. For example, a transceiver is configured to complete functions of the receiving unit and the sending unit, a processor is configured to complete functions of the processing unit, and a memory is configured to process a program instruction of the power line channel-based data frame transmission method in the embodiments of this application. The processor, the transceiver, and the memory are connected to each other and communicate with each other through a bus. For details, refer to functions of actions of the sending node in the power line channel-based data frame transmission method according to the first aspect and functions of actions of the receiving node in the power line channel-based data frame transmission method according to the second aspect.

According to a fifth aspect of the embodiments of this application, a sending node is provided, including a processor and a transceiver. The processor is configured to: when generating a data frame, divide to-be-sent data into N data sections based on physical layer transmission parameters for N time windows. The N time windows belong to M regions. Each of the M regions includes at least one time window, which may also be understood as that each of the M regions corresponds to one physical layer transmission parameter. It is equivalent that a physical layer transmission parameter for one region corresponds to one power line channel state. Therefore, the physical layer transmission parameters for the N time windows correspond to M power line channel states. The physical layer transmission parameters for the N time windows may be completely or partially different, and physical layer transmission parameters for two adjacent time windows are different. When M is equal to N, it indicates that the channel state does not recur in duration for sending the data frame, and the time windows belong to different regions. When M is less than N, it indicates that at least two non-adjacent time windows in the N time windows belong to a same region and a same physical layer transmission parameter is used to transmit data sections in the at least two non-adjacent time windows. The transceiver is configured to: after the data frame is generated, send the data frame in the N time windows. A power line channel corresponding to an i<sup>th</sup> time window is used to transmit an i<sup>th</sup> data section. In addition, the data frame includes not only the N data sections but also a header. The header includes a header symbol. The header symbol includes first indication information and second indication information. The first indication information is used to indicate that the data frame is a channel-adaptive aggregated data frame. The second indication information includes a parsing parameter used to parse the payload. i is an integer, and values of i range from 1 to N. N is an integer greater than or equal to 2, M is an integer greater than or equal to 1, and M is less than or equal to N.

According to a power line channel-based data frame transmission method provided in the embodiments of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of a power line channel.

Specific content included in the parsing parameter may have the following two implementations:

Implementation 1: The parsing parameter includes a quantity of data sections, a quantity of data symbols actually used to carry each data section, and an identifier of a physical layer transmission parameter that is used to transmit each data section in a time window.

Implementation 2: The parsing parameter includes a start moment for sending the data frame.

In this way, a receiving node can parse the data frame based on the parsing parameter, to obtain data transmitted through the data frame.

With reference to the fifth aspect, in a possible implementation, the payload further includes P transition sections. Each transition section is used to separate two adjacent time windows. P is an integer greater than or equal to 1 and less than or equal to N-1.

Specifically, during actual application, a transition symbol may be used to implement a function of the transition section. In other words, the transition symbol is used to separate two adjacent time windows. A $j^{th}$ transition section includes a transition symbol. j is an integer, and values of j range from 1 to P. The transition symbol included in the $j^{th}$ transition section is a silent symbol, or is a dummy symbol using pseudo-random data, or is a data symbol that is for carrying a data section and that is in a time window adjacent to the $j^{th}$ transition section. Alternatively, a $j^{th}$ transition section is transition duration. The transition section is introduced into the data frame. This effectively avoids a bit error caused by power line channel instability due to power line channel transfer in cross-window transmission, and ensures stability and accuracy of communication.

When the transition section includes a transition symbol, the parsing parameter may further include a quantity of transition sections and a quantity of transition symbols actually used for each transition section.

When the transition section is transition duration, the parsing parameter may further include a quantity of transition sections and transition duration actually used for each transition section.

With reference to the foregoing possible implementation, in another possible implementation, the transceiver is further configured to obtain a start moment and an end moment that correspond to each of the P transition sections. In this way, the sending node can determine each of the P transition sections based on the start moment and the end moment that correspond to the transition section. Alternatively, the transceiver is further configured to obtain a quantity of transition symbols included in each of the P transition sections.

In addition, the transceiver is further configured to obtain a start moment, an end moment, and a physical layer transmission parameter that correspond to each of the N time windows.

With reference to the foregoing possible implementations, that the processor divides the to-be-sent data into the N data sections based on the physical layer transmission parameters for the N time windows includes the following possible implementation. The processor is specifically configured to: first determine an $i^{th}$ target symbol quantity based on an $i^{th}$ piece of to-be-sent data and a physical layer transmission parameter for the $i^{th}$ time window, and determines an $i^{th}$ original symbol quantity; then determine whether the $i^{th}$ target symbol quantity is less than or equal to the $i^{th}$ original symbol quantity; if the $i^{th}$ target symbol quantity is less than or equal to the

$i^{th}$ original symbol quantity, determine the $i^{th}$ target symbol quantity as an $i^{th}$ actual symbol quantity; or if the $i^{th}$ target symbol quantity is greater than the $i^{th}$ original symbol quantity, determine the $i^{th}$ original symbol quantity as an $i^{th}$ actual symbol quantity; and finally, determine the $i^{th}$ data section based on the physical layer transmission parameter for the $i^{th}$ time window and the $i^{th}$ actual symbol quantity. The $i^{th}$ piece of to-be-sent data is the to-be-sent data or a part of the to-be-sent data. The $i^{th}$ target symbol quantity is a quantity of data symbols that need to be used to carry the $i^{th}$ piece of to-be-sent data when the sending node sends the $i^{th}$ piece of to-be-sent data. The $i^{th}$ original symbol quantity is a quantity of data symbols that can be transmitted in duration from a start moment for sending the $i^{th}$ piece of to-be-sent data to an end moment of the $i^{th}$ time window. The $i^{th}$ actual symbol quantity is a quantity of data symbols actually used to carry the $i^{th}$ data section when the $i^{th}$ data section is sent.

That the processor determines the $i^{th}$ original symbol quantity specifically includes: The processor first obtains the start moment for sending the $i^{th}$ piece of to-be-sent data and the end moment of the $i^{th}$ time window; obtains, based on the start moment for sending the $i^{th}$ piece of to-be-sent data and the end moment of the $i^{th}$ time window, available duration for sending the $i^{th}$ piece of to-be-sent data; and determines the $i^{th}$ original symbol quantity based on the available duration for sending the $i^{th}$ piece of to-be-sent data and duration of a data symbol. The available duration for sending the $i^{th}$ piece of to-be-sent data is a difference between the start moment for sending the $i^{th}$ piece of to-be-sent data and the end moment of the $i^{th}$ time window. The data symbol is a symbol that is for transmitting the $i^{th}$ piece of to-be-sent data and that is in the $i^{th}$ time window.

Particularly, when i=1, that the processor determines the $i^{th}$ original symbol quantity based on the available duration for sending the $i^{th}$ piece of to-be-sent data and the duration of the data symbol specifically includes: The processor determines the $i^{th}$ original symbol quantity based on the available duration for sending the $i^{th}$ piece of to-be-sent data, duration for sending the header, and the duration of the data symbol.

According to a sixth aspect of the embodiments of this application, a receiving node is provided, including a transceiver and a processor. The transceiver is configured to receive a data frame. The processor is configured to parse the data frame to obtain data transmitted through the data frame. The data frame includes a header and a payload. The header includes a header symbol. The header symbol includes first indication information and second indication information. The first indication information is used to indicate that the data frame is a channel-adaptive aggregated data frame. The second indication information includes a parsing parameter used to parse the payload. The payload includes N data sections. The N data sections are obtained by dividing the to-be-sent data based on physical layer transmission parameters for N time windows. The N time windows belong to M regions. Each of the M regions corresponds to one physical layer transmission parameter. One region includes at least one time window. Physical layer transmission parameters for two adjacent time windows are different. N is an integer greater than or equal to 2, M is an integer greater than or equal to 1, and M is less than or equal to N.

According to a power line channel-based data frame transmission method provided in the embodiments of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of a power line channel.

Specific content included in the parsing parameter may have the following two implementations:

Implementation 1: The parsing parameter includes a quantity of data sections, a quantity of data symbols actually used to carry each data section, and an identifier of a physical layer transmission parameter that is used to transmit each data section in a time window.

Implementation 2: The parsing parameter includes a start moment for sending the data frame.

In this way, the receiving node can parse the data frame based on the parsing parameter, to obtain data transmitted through the data frame.

With reference to the sixth aspect, in a possible implementation, the payload further includes P transition sections. Each transition section is used to separate two adjacent time windows. P is an integer greater than or equal to 1 and less than or equal to N-1.

Specifically, during actual application, a transition symbol may be used to implement a function of the transition section. In other words, the transition symbol is used to separate two adjacent time windows. A $j^{th}$ transition section includes a transition symbol. j is an integer, and values of j range from 1 to P. The transition symbol included in the $j^{th}$ transition section is a silent symbol, or is a dummy symbol using pseudo-random data, or is a data symbol that is for carrying a data section and that is in a time window adjacent to the $j^{th}$ transition section. Alternatively, a $j^{th}$ transition section is transition duration. The transition section is introduced into the data frame. This effectively avoids a bit error caused by power line channel instability due to power line channel transfer in cross-window transmission, and ensures stability and accuracy of communication.

When the transition section includes a transition symbol, the parsing parameter may further include a quantity of transition sections and a quantity of transition symbols actually used for each transition section.

When the transition section is transition duration, the parsing parameter may further include a quantity of transition sections and transition duration actually used for each transition section.

With reference to the foregoing possible implementation, in another possible implementation, the transceiver is further configured to send a start moment and an end moment that correspond to each of the P transition sections. In this way, a sending node can determine each of the P transition sections based on the start moment and the end moment that correspond to the transition section. Alternatively, the transceiver is further configured to send a quantity of transition symbols included in each of the P transition sections.

In addition, the transceiver is further configured to send a start moment, an end moment, and a physical layer transmission parameter that correspond to each of the N time windows.

According to a seventh aspect, an embodiment of this application provides a communication apparatus, including a processor, a memory, a bus, and a transceiver. The memory is configured to store a computer-executable instruction. The processor and the memory are connected through the bus. When the processor runs, the processor executes the computer-executable instruction stored in the memory, to enable the communication apparatus to perform the method according to any one of the foregoing aspects.

According to an eighth aspect, an embodiment of this application provides a computer-readable storage medium, configured to store a computer software instruction used by the foregoing sending node or the foregoing receiving node. When the computer software instruction is run on a computer, the computer is enabled to perform the method according to any one of the foregoing aspects.

According to a ninth aspect, an embodiment of this application provides a computer program product including an instruction. When the instruction is run on a computer, the computer is enabled to perform the method according to any one of the foregoing aspects.

In addition, for a technical effect brought by any design of the third aspect to the ninth aspect, refer to the technical effects brought by different designs of the first aspect and the second aspect. Details are not described herein again.

In the embodiments of this application, names of the sending node, the receiving node, and the communication apparatus constitute no limitation on the devices. In actual implementation, these devices may have other names. Provided that functions of the devices are similar to those in the embodiments of this application, the devices fall within the scope of the claims of this application and their equivalent technologies.

These aspects or other aspects in the embodiments of this application are clearer and more intelligible in descriptions in the following embodiments.

BRIEF DESCRIPTION OF DRAWINGS

FIG. 1 is a schematic diagram of a power line channel response and noise that change with time in the prior art;
FIG. 2 is a schematic diagram of division into time windows for a power line channel in the prior art;
FIG. 3 is a schematic diagram of a structure of a data frame in the prior art;
FIG. 4 is a schematic architectural diagram of a home power line network according to an embodiment of this application;
FIG. 5 is a flowchart of a power line channel-based data frame transmission method according to an embodiment of this application;
FIG. 6(a) is a schematic diagram of a data frame structure according to an embodiment of this application;
FIG. 6(b) is a schematic diagram of another data frame structure according to an embodiment of this application;
FIG. 7 is a flowchart of another power line channel-based data frame transmission method according to an embodiment of this application;
FIG. 8 is a schematic diagram of determining a start moment for sending an $i^{th}$ piece of to-be-sent data according to an embodiment of this application;
FIG. 9A and FIG. 9B are a flowchart of still another power line channel-based data frame transmission method according to an embodiment of this application;
FIG. 10 is a schematic diagram of composition of a sending node according to an embodiment of this application;
FIG. 11 is a schematic diagram of composition of a communication apparatus according to an embodiment of this application;
FIG. 12 is a schematic diagram of composition of another sending node according to an embodiment of this application;
FIG. 13 is a schematic diagram of composition of a receiving node according to an embodiment of this application; and
FIG. 14 is a schematic diagram of composition of another receiving node according to an embodiment of this application.

DESCRIPTION OF EMBODIMENTS

Power line communication (power line communication, PLC) applies a power supply network to a communication system. In this case, the power supply network may be considered as a communication medium for transmission of various telecommunication services. Therefore, an existing power supply network may be used for a PLC-based telecommunication network, to reduce costs of network deployment. However, a power line channel state changes with time, and different channel states correspond to different physical layer transmission parameters. Therefore, the power line communication is also a type of burst communication. To adapt to communication in different channel states in one alternating current cycle, the alternating current cycle may be divided into a plurality of regions based on physical layer transmission parameters for the channel states, and one region corresponds to one channel state. It may be understood that different physical layer transmission parameters are used to transmit data frames in different regions. In addition, because the power line channel state continuously changes in one alternating current cycle, one region may include a plurality of discrete time windows. A same physical layer transmission parameter is used in different time windows of a same region. The time window is a continuous period of time. Correspondingly, two adjacent time windows belong to different regions, and different physical layer transmission parameters are used to transmit data frames in the two adjacent time windows. Non-adjacent time windows may belong to a same region, and a same physical layer transmission parameter may be used to transmit data frames in the non-adjacent time windows. Certainly, non-adjacent time windows may alternatively belong to different regions, and different physical layer transmission parameters may be used to transmit data frames in the non-adjacent time windows. However, a same data frame cannot be communicated across time windows. Otherwise, data cannot be accurately demodulated, causing a communication error. FIG. 3 is a schematic diagram of a structure of a data frame in the prior art. The data frame includes a header and a payload. The header includes a preamble symbol and a header symbol. The header may further include an additional channel estimation symbol.

When the power line channel state changes more frequently, there are more time windows, and more individual data frames are transmitted in independent time windows. Each data frame includes a header. Therefore, when a quantity of individual data frames is increased, headers for communication are also increased, and become redundant information. This reduces utilization of a power line channel.

To resolve a problem that utilization of a power line channel is relatively low, the embodiments of this application provides a power line channel-based data frame transmission method. A basic principle of the method is: When generating a data frame, a sending node divides to-be-sent data into N data sections based on physical layer transmission parameters for N time windows. The N time windows belong to M regions. Each of the M regions includes at least one time window, which may also be understood as that each of the M regions corresponds to one physical layer transmission parameter. It is equivalent that a physical layer transmission parameter for one region corresponds to one power line channel state. Therefore, the physical layer transmission parameters for the N time windows correspond to M power line channel states. The physical layer transmission parameters for the N time windows may be completely or partially different, and physical layer transmission parameters for two adjacent time windows are different. When M is equal to N, it indicates that the channel state does not recur in duration for sending the data frame, and the time windows belong to different regions. When M is less than N, it indicates that at least two non-adjacent time windows in the N time windows belong to a same region and a same physical layer transmission parameter is used to transmit data sections in the at least two non-adjacent time windows. After generating the data frame, the sending node sends the data frame in the N time windows. A power line channel corresponding to an $i^{th}$ time window is used to transmit an $i^{th}$ data section. In addition, the data frame includes not only the N data sections but also a header. The header includes a header symbol. The header symbol includes first indication information and second indication information. The first indication information is used to indicate that the data frame is a channel-adaptive aggregated data frame. The second indication information includes a parsing parameter used to parse the payload. i is an integer, and values of i range from 1 to N. N is an integer greater than or equal to 2, M is an integer greater than or equal to 1, and M is less than or equal to N.

According to the power line channel-based data frame transmission method provided in the embodiments of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of the power line channel. In addition, a transition symbol is introduced into the data frame. This avoids a bit error caused by power line channel instability due to power line channel transfer in cross-window transmission, and ensures stability and accuracy of communication.

The following describes implementations of the embodiments of this application in detail with reference to the accompanying drawings.

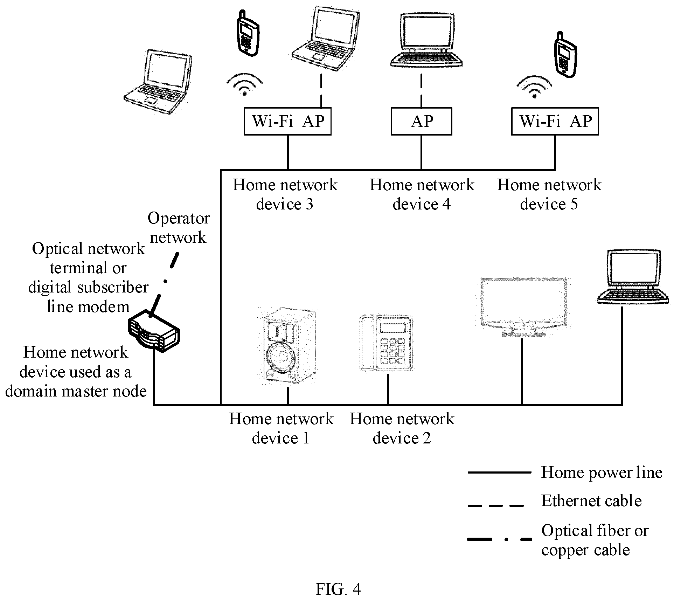

FIG. 4 is a schematic architectural diagram of a home power line network according to an embodiment of this application. As shown in FIG. 4, the system includes a home network device serving as a domain master (domain master, DM) node, and a home network device 1 to a home network device 5.

A domain (domain) may be understood as a communication network including a plurality of home network devices. One domain may include a plurality of home network devices that communicate with each other through a home network medium. The domain includes a domain master node and a domain endpoint node (end point node, EP Node). The domain master node may be understood as a home network node that has a management and control function in the domain. The domain master node may interact with a home network device located outside the domain, to enable the home network device located outside the domain to join the domain. The domain endpoint node may be understood as a home network node other than the domain master node in the domain. For example, the home network device 1 to the home network device 5 in FIG. 4 may be referred to as domain endpoint nodes.

The domain master node, as an access device of the home power line network, may be located on a terminal device such as an optical network terminal (optical network terminal, ONT) or a digital subscriber line modem (digital subscriber line, DSL modem). The domain master node may be connected to an operator network through, for example, an optical fiber or a copper wire, and perform uplink data transmission. In this case, the domain master node may be connected with the home network device 1 (a domain endpoint node 1) to the home network device 5 (a domain endpoint node 5) through a medium such as a power line or a coaxial cable. For example, in FIG. 4, the domain master node may be connected to home network devices such as wireless fidelity (wireless fidelity, Wi-Fi) access points (access point, AP), a wired AP, and smart household appliances through the power line, perform downlink data transmission, and manage the home power line network. In this way, the domain master node device may implement cross-network data transmission between the operator network and the home power line network. A home network device such as a power line communication modem or a router may be connected to the domain master node through the power line, and perform uplink data transmission. The home network device such as the power line communication modem or the router may access the home power line network as a domain endpoint node. The home network device may be connected to a terminal used by a user such as a mobile phone, a computer, or a television set in a connection manner, for example, through a network cable or wireless fidelity, and perform downlink data transmission. The home network device that accesses the home power line network as the domain endpoint node may also be understood as a home network device serving as a lower-level network dispatch node.

Intra-domain communication may be encrypted or non-encrypted, and corresponding domains may include a security domain and a non-security domain. In the security domain, home network devices communicate with each other in an encryption mode. In the non-security domain, home network devices communicate with each other in a non-encryption mode.

The home network device may be understood as a device that performs communication through a home network medium. The home network device may also be referred to as a communication node or an endpoint node. The home network medium may be, for example, a coaxial cable, a twisted pair, a power line, and a plastic optical fiber. Currently, some examples of the home network device are terminals with a home network chip, such as a digital subscriber line modem (digital subscriber line, DSL modem), an optical network terminal (optical network terminal, ONT), and a home router. A sending node or a receiving node described in the embodiments of this application may be a home network device. A terminal device of this type may be connected to the internet, and may be connected, through a home network, to a user terminal, a wireless (wireless) or wired (wireline) access point, power line communication devices that may be used in an industrial application scenario, and various internet of things (internet of things, IoT) devices. The power line communication devices include a smart meter and the like. The internet of things devices access the home network through the home network medium, and are connected to various terminals or are terminal devices.

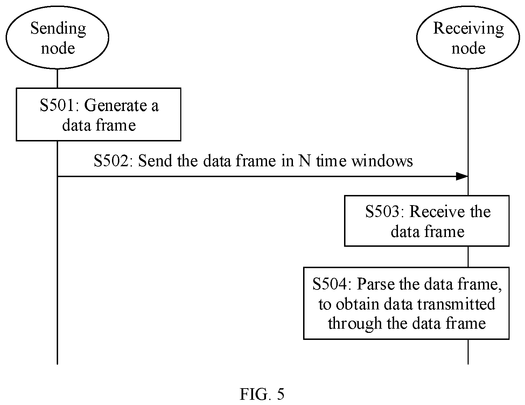

FIG. 5 is a flowchart of a power line channel-based data frame transmission method according to an embodiment of this application. As shown in FIG. 5, the method may include the following steps.

S501: A sending node generates a data frame.

After obtaining to-be-sent data, the sending node first divides the to-be-sent data into N data sections based on physical layer transmission parameters for N time windows, and aggregates the N data sections to generate a payload of the data frame. N is an integer greater than or equal to 2. In other words, the data frame includes at least two data sections. The N time windows belong to M regions. Each of the M regions includes at least one time window, which may also be understood as that each of the M regions corresponds to one physical layer transmission parameter. It is equivalent that a physical layer transmission parameter for one region corresponds to one power line channel state. The region may be a bit allocation table region defined in ITU-T G.9960. It may be understood that the bit allocation table region may be a region including one time window or a plurality of discrete time windows, and physical layer transmission parameters for the plurality of discrete time windows are the same. M is an integer greater than or equal to 1, and M is less than or equal to N.

When M is equal to N, it indicates that a channel state does not recur in duration for sending the data frame, and the time windows belong to different regions. The physical layer transmission parameters for the N time windows are completely different. In other words, power line channel states corresponding to the time windows are different. A physical layer transmission parameter for one time window corresponds to one power line channel state, and the physical layer transmission parameters for the N time windows correspond to N power line channel states.

When M is less than N, it indicates that at least two non-adjacent time windows in the N time windows belong to a same region and a same physical layer transmission parameter is used to transmit data sections in the at least two non-adjacent time windows. The physical layer transmission parameters for the N time windows may be partially different. In other words, physical layer transmission parameters for two non-adjacent time windows may be the same, and physical layer transmission parameters for two adjacent time windows are different. At least two of the N time windows correspond to a same power line channel state. A physical layer transmission parameter for one region corresponds to one power line channel state, and the physical layer transmission parameters for the N time windows correspond to M power line channel states.

In addition, during actual application, an unstable channel state is included in a power line channel state change process. In other words, two time windows cannot be completely continuous, and there may be transition duration between the two time windows. Therefore, the payload further includes P transition sections. Each transition section is used to separate two adjacent time windows, which may also be understood as that each transition section is used to separate power line channels in two different channel states. P is an integer greater than or equal to 1 and less than or equal to N-1.

Any one of the P transition sections is determined based on the transition duration. The transition duration is used to indicate duration between two adjacent time windows. The transition duration may also be understood as duration between power line channels in two different channel states. For example, a $j^{th}$ transition section is determined based on $j^{th}$ transition duration. j is an integer, and values of j range from 1 to P. The $j^{th}$ transition duration may be determined based on a start moment and an end moment that correspond to the $j^{th}$ transition section. The start moment and the end moment that correspond to the $j^{th}$ transition section are obtained from a receiving node after the sending node and the receiving node establish a connection. Certainly, the receiving node may alternatively send start moments and transition duration that correspond to the P transition sections.

During transmission of the data frame, the transition duration may be directly used to implement a function of the transition section. In other words, the $j^{th}$ transition section is the transition duration. It may be understood that the sending node does not need to transmit any symbol within the duration corresponding to the $j^{th}$ transition section, and may transmit a $(j+1)^{th}$ data section after the $j^{th}$ transition duration. Alternatively, during transmission of the data frame, a transition symbol may be used to implement a function of the transition section. In other words, the transition symbol is used to separate two adjacent time windows. The $j^{th}$ transition section includes a transition symbol. For example, the transition symbol included in the $j^{th}$ transition section is a silent symbol. The silent symbol is a symbol on which data or a signal is not sent, and strength of the silent symbol is 0. Alternatively, the transition symbol included in the $j^{th}$

transition section is a data symbol that is for carrying a data section and that is in a time window adjacent to the $j^{th}$ transition duration. For example, when j=1, a transition symbol included in the first transition section is a data symbol that is for carrying a data section and that is in a first time window adjacent to first transition duration, or is a data symbol that is for carrying a data section and that is in a second time window adjacent to first transition duration. The data symbol that is for carrying the data section and that is in the first time window may be the last data symbol that is for carrying the data section and that is in the first time window. The data symbol that is for carrying the data section and that is in the second time window may be the first data symbol that is for carrying the data section and that is in the second time window. A type of the transition symbol is not limited in this embodiment of this application. During actual application, the transition symbol may alternatively be a symbol of another type, for example, a dummy symbol (dummy symbol) used to carry pseudo-random data or other specific data. It should be noted that a quantity of transition symbols depends on transition duration between two time windows (power line channels). The transition section may include an integer quantity of transition symbols or a non-integer quantity of transition symbols, for example, 1.5 transition symbols. Optionally, the receiving node may alternatively directly send a quantity of transition symbols included in each of the P transition sections to the sending node. In addition, when P is less than N-1, it indicates that in the N time windows, there are two adjacent time windows between which a transition section does not exist.

Further, the data frame includes a header. Generally, the header is transmitted in the first time window. The header includes a preamble symbol and a header symbol. The preamble symbol is used to estimate a power line channel and synchronize the data frame. The header symbol includes first indication information and second indication information. The first indication information is used to indicate that the data frame is a channel-adaptive aggregated data frame. For example, the first indication information may be implemented by using one bit, and different values of the bit may indicate whether the data frame is the channel-adaptive aggregated data frame. When the bit is 1, it indicates that the data frame is the channel-adaptive aggregated data frame. When the bit is 0, it indicates that the data frame is not the channel-adaptive aggregated data frame. The channel-adaptive aggregated data frame is a data frame including a plurality of data sections. The plurality of data sections can be continuously transmitted on power line channels in a plurality of different channel states. The second indication information includes a parsing parameter used to parse the payload.

In a possible implementation, the parsing parameter includes a quantity of data sections, a quantity of data symbols actually used to carry each data section, an identifier of a physical layer transmission parameter that is used to transmit each data section in a time window, a quantity of transition sections, and a quantity of transition symbols actually used for each transition section. An identifier of a physical layer transmission parameter that is used to transmit each data section in a time window may be a bit allocation table identifier and an FEC identifier that are used to transmit each data section in the time window. Therefore, the receiving node may find a corresponding bit allocation table based on the bit allocation table identifier, and find a corresponding FEC code and a corresponding FEC coding rate based on the FEC identifier; and may parse, based on the bit allocation table, the FEC code, and the FEC coding rate, the data section transmitted in the time window. It should be noted that, if the transition section includes the transition symbol, the parsing parameter may include the quantity of transition sections and the quantity of transition symbols actually used for each transition section. If the transition section is the transition duration, the parsing parameter may not include the quantity of transition sections and the quantity of transition symbols actually used for each transition section, but the quantity of data sections, the quantity of data symbols actually used to carry each data section, the identifier of the physical layer transmission parameter that is used to transmit each data section in the time window, the quantity of transition sections, and transition duration actually used for each transition section.

In another possible implementation, the parsing parameter includes a start moment for sending the data frame. The start moment for sending the data frame may be determined based on a network time reference (network time reference, NTR). The start moment for sending the data frame may be any moment in any time window.

During actual application, the header may further include an additional channel estimation symbol. The additional channel estimation symbol is used to estimate the power line channel.

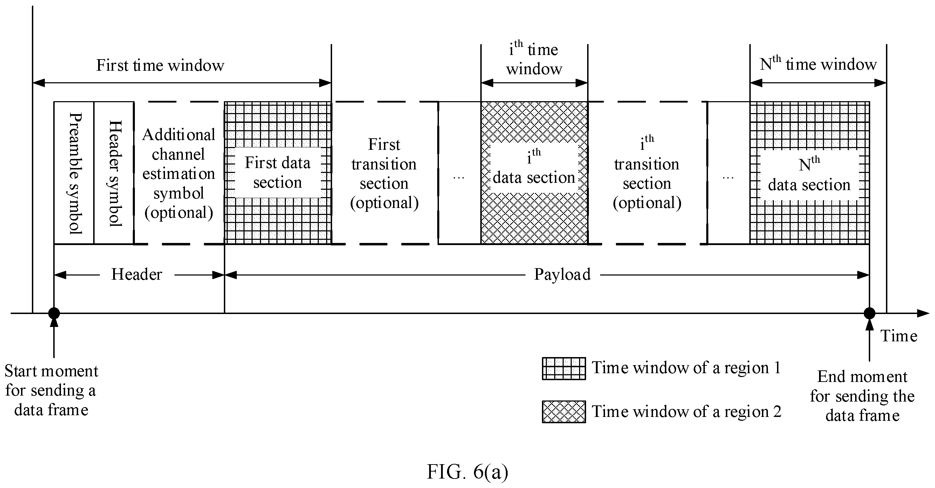

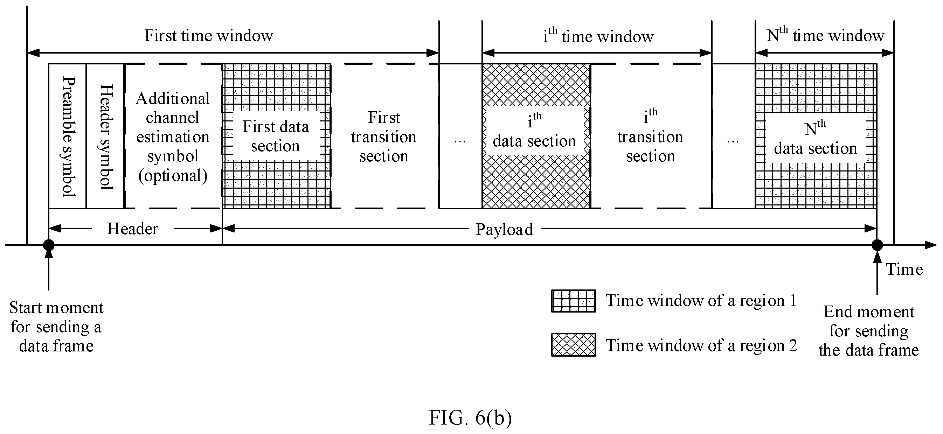

FIG. 6(a) is a schematic diagram of a data frame structure according to an embodiment of this application. The header and a first data section that are of the data frame are transmitted in the first time window. An $i^{th}$ data section of the data frame is transmitted in an $i^{th}$ time window. An $N^{th}$ data section of the data frame is transmitted in an $N^{th}$ time window. It should be noted that the start moment for sending the data frame is in the first time window. In other words, duration for transmitting the header and the first data section that are of the data frame occupies a part of the first time window. During actual application, the start moment for sending the data frame may alternatively be a start moment of the first time window. Likewise, an end moment for sending the data frame is in the first time window. In other words, duration for transmitting the $N^{th}$ data section of the data frame occupies a part of the $N^{th}$ time window. During actual application, the end moment for sending the data frame may alternatively be an end moment of the $N^{th}$ time window. There are transition sections among the N time windows.

Particularly, when the sending node determines a quantity of data symbols that can be transmitted in the $i^{th}$ time window, namely, an $i^{th}$ original symbol quantity, generation of a transition symbol needs to be considered at the tail of the $i^{th}$ time window. The transition symbol may be generated according to a preset rule. The preset rule may be: If the tail of the $i^{th}$ time window includes x% of a data symbol, the data symbol may be used as a transition symbol for a transition section adjacent to the $i^{th}$ time window. For example, x% may be 20%. It indicates that the tail of the $i^{th}$ time window includes only 20% of the data symbol, and remaining 80% of the data symbol is transmitted after an end moment of the $i^{th}$ time window. In this case, the entire data symbol is transmitted as the transition symbol for the transition section. Alternatively, the transition section may be considered as a part transmitted in the time window. FIG. 6(a) is a schematic diagram of another data frame structure according to an embodiment of this application. The transition section is transmitted in the time window.

In addition, the data symbol and the transition symbol described in this embodiment of this application may be orthogonal frequency division multiplexing (orthogonal frequency division multiplexing, OFDM) symbols.

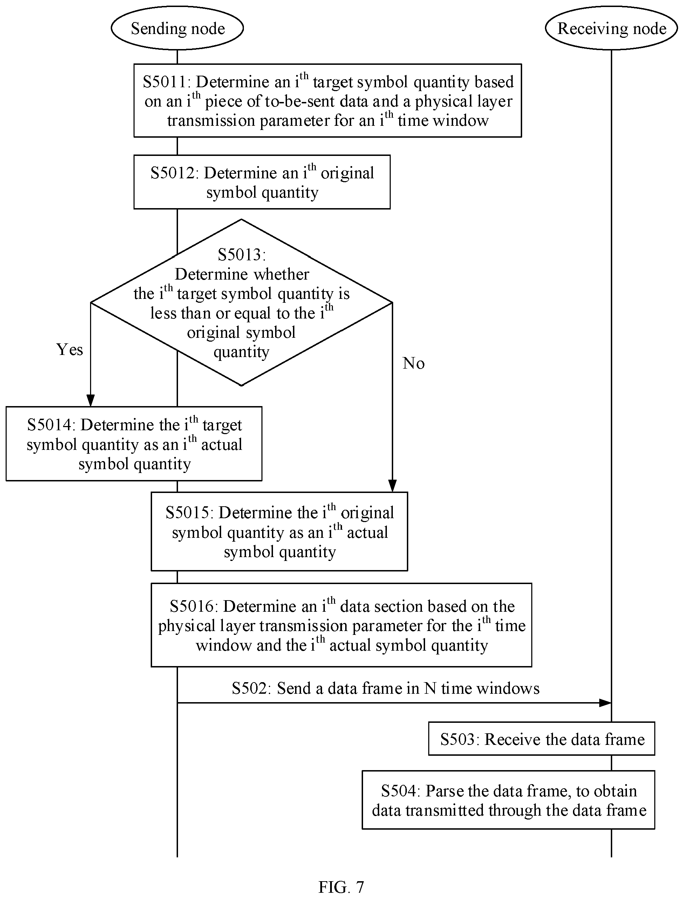

Any one of the N data sections may be obtained in the following manner. The $i^{th}$ data section is used as an example to describe the manner of obtaining the data section. i is an integer, and values of i range from 1 to N. As shown in FIG. 7, the manner of obtaining the $i^{th}$ data section described in this embodiment of this application may include the following steps.

S5011: The sending node determines an $i^{th}$ target symbol quantity based on an $i^{th}$ piece of to-be-sent data and a physical layer transmission parameter for the $i^{th}$ time window.

The $i^{th}$ target symbol quantity is a quantity of data symbols that need to be used to carry the $i^{th}$ piece of to-be-sent data when the sending node sends the $i^{th}$ piece of to-be-sent data. Physical layer transmission parameters include a bit allocation table, a forward error correction (Forward Error Correction, FEC) code, an FEC coding rate, and a guard interval (guard interval for payload) symbol. The sending node may calculate, based on the physical layer transmission parameter for the $i^{th}$ time window, the $i^{th}$ target symbol quantity required for transmitting the $i^{th}$ piece of to-be-sent data. For a specific calculation process, refer to the prior art. Details are not described in this embodiment of this application.

It should be noted that when i=1, the $i^{th}$ piece of to-be-sent data is the to-be-sent data, and the sending node may determine a first target symbol quantity based on the to-be-sent data and a physical layer transmission parameter for the first time window.

When i is greater than or equal to 2, the $i^{th}$ piece of to-be-sent data is a part of the to-be-sent data. For example, when i=2, the sending node may determine a second target symbol quantity based on the part of the to-be-sent data and a physical layer transmission parameter for the second time window. The part of the to-be-sent data herein may be understood as data that remains after i data sections obtained through division are excluded from the to-be-sent data. For example, when i=3, the sending node determines a third target symbol quantity based on a third piece of to-be-sent data and a physical layer transmission parameter for a third time window. The third piece of to-be-sent data is data that remains after the first data section and a second data section are excluded from the to-be-sent data. When i=N, the sending node determines an $N^{th}$ target symbol quantity based on an $N^{th}$ piece of to-be-sent data and a physical layer transmission parameter for the $N^{th}$ time window. The $N^{th}$ piece of to-be-sent data is data that remains after N-1 data sections are excluded from the to-be-sent data.

It should be noted that, there is a mapping relationship between an FEC code block and a symbol. When a same FEC code and a same FEC coding rate are used for two adjacent time windows, an FEC code block may directly cross the two adjacent time windows. For example, a former part of an FEC code block is modulated onto last X symbols of a preceding time window, and a latter part of the FEC code block is modulated onto first Y symbols of a following time window. When different FEC codes and different FEC coding rates are used for two adjacent time windows, a puncturing manner may generally be used for the last FEC codeword in a preceding time window because a resource on a remaining symbol of the preceding time window cannot carry all bits of the codeword. Specifically, for example, a quantity of remaining bits of the last codeword that can be carried by the preceding time window is first calculated. Then, a quantity of payload bits that can be carried is calculated based on the coding rate. To-be-transmitted bit data is input based on the quantity of payload bits, and the remaining to-be-encoded payload bits are padded with zeros by default or are processed in another manner. After FEC coding is completed, all the bits that are padded with zeros by default are deleted, and a remaining payload and an encoded check bit are modulated together onto the last part of resources of the preceding window. In addition, for the following time window, encoding and modulation are directly performed based on the FEC code and the FEC coding rate that correspond to the following time window.

S5012: The sending node determines an $i^{th}$ original symbol quantity.

The $i^{th}$ original symbol quantity is a quantity of data symbols that can be transmitted in duration from a start moment for sending the $i^{th}$ piece of to-be-sent data to the end moment of the $i^{th}$ time window.

Specifically, the sending node first obtains the start moment for sending the $i^{th}$ piece of to-be-sent data and the end moment of the $i^{th}$ time window. Then, the sending node obtains available duration for sending the $i^{th}$ piece of to-be-sent data. The available duration for sending the $i^{th}$ piece of to-be-sent data may be understood as a difference between the start moment for sending the $i^{th}$ piece of to-be-sent data and the end moment of the $i^{th}$ time window. Then, the sending node determines the $i^{th}$ original symbol quantity based on the available duration for sending the $i^{th}$ piece of to-be-sent data and duration of a data symbol. The data symbol is a symbol for transmitting the $i^{th}$ piece of to-be-sent data. The duration of the data symbol for transmitting the $i^{th}$ piece of to-be-sent data may depend on a subcarrier spacing and a cyclic prefix. The subcarrier spacing is a fixed value. The cyclic prefix is a variable value.

A formula is used:

$$R_i = \frac{T_i}{T_{is}} = \frac{\left(T_{i1} - T_{i2}\right)}{T_{is}}.$$ $R_i$ represents the $i^{th}$ original symbol quantity. $T_i$ represents the available duration for sending the $i^{th}$ piece of to-be-sent data. $T_{is}$ represents duration of a data symbol in the $i^{th}$ time window. $T_{i1}$ represents the start moment for sending the $i^{th}$ piece of to-be-sent data. $T_{i2}$ represents the end moment of the $i^{th}$ time window, which may also be understood as an end moment for sending the $i^{th}$ piece of to-be-sent data.

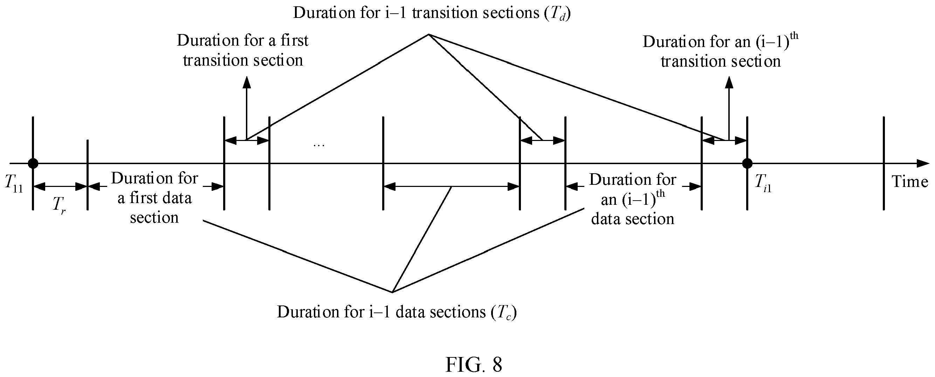

It should be noted that when i=1, a start moment for sending a first piece of to-be-sent data is the start moment for sending the data frame, and may be obtained based on an internal clock of the sending node. When i is greater than or equal to 2, the start moment for sending the $i^{th}$ piece of to-be-sent data may be determined based on both a start moment for sending a first piece of to-be-sent data and duration for transmitting i-1 data sections. If there is a transition section among time windows for sending the i-1 data sections, the start moment for sending the $i^{th}$ piece of to-be-sent data is determined based on all of the start moment for sending the first piece of to-be-sent data, the duration for sending the i-1 data sections, and the transition section among the time windows for sending the i-1 data sections. The end moment of the $i^{th}$ time window is obtained from the receiving node after the sending node and the receiving node establish the connection. For example, as shown in FIG. 8, it is assumed that $T_{11}$ represents the start moment for sending the first piece of to-be-sent data, $T_c$ represents the duration for transmitting the i-1 data sections, $T_d$ represents duration of i-1 transition sections, and $T_r$ represents duration for sending the header. The start moment for sending the $i^{th}$ piece of to-be-sent data is a moment after the duration for transmitting the i-1 data sections, the duration for sending the header, and the duration of the i-1 transition sections from the start moment for sending the first piece of to-be-sent data.

Particularly, when i=1, to determine the $i^{th}$ original symbol quantity based on the available duration for sending the $i^{th}$ piece of to-be-sent data and the duration of the data symbol, the sending node subtracts the duration for sending the header from the available duration for sending the $i^{th}$ piece of to-be-sent data, and determines the $i^{th}$ original symbol quantity based on the duration of the data symbol. A formula is used for representation: $R_i = \frac{T_i - T_r}{T_{is}} = \frac{\left(T_{i1} - T_{i2}\right) - T_r}{T_{is}}.$ $T_r$ represents the duration for sending the header.

S5013: The sending node determines whether the $i^{th}$ target symbol quantity is less than or equal to the $i^{th}$ original symbol quantity.

If the $i^{th}$ target symbol quantity is less than or equal to the $i^{th}$ original symbol quantity, the sending node performs S5014. If the $i^{th}$ target symbol quantity is greater than the $i^{th}$ original symbol quantity, the sending node performs S5015.

S5014: The sending node determines the $i^{th}$ target symbol quantity as an $i^{th}$ actual symbol quantity.

The $i^{th}$ actual symbol quantity is a quantity of data symbols actually used to carry the $i^{th}$ data section when the $i^{th}$ data section is sent. In this case, it is equivalent that the sending node has determined a quantity of symbols that need to be used to transmit the to-be-sent data.

S5015: The sending node determines the $i^{th}$ original symbol quantity as an $i^{th}$ actual symbol quantity.

In this case, it is equivalent that transmission of the to-be-sent data has not been completed in the $i^{th}$ time window, and another time window is further required for transmission. Therefore, the sending node further needs to determine an $(i+1)^{th}$ actual symbol quantity. The $(i+1)^{th}$ actual symbol quantity is a quantity of data symbols actually used to carry an $(i+1)^{th}$ data section when the $(i+1)^{th}$ data section is sent.

S5016: The sending node determines the $i^{th}$ data section based on the $i^{th}$ actual symbol quantity and the physical layer transmission parameter for the $i^{th}$ time window.

A physical layer transmission parameter further includes a bit allocation table for each time window. The bit allocation table includes a quantity of subcarriers included in each of data symbols transmitted in the time window, and a quantity of bits carried on each subcarrier. For example, one data symbol includes 4096 subcarriers, and each subcarrier carries two bits. Then, one symbol may carry 8192 bits. The sending node may determine, based on both the $i^{th}$ actual symbol quantity and a bit allocation table for the $i^{th}$ time window, a quantity of data that can be transmitted, to obtain the $i^{th}$ data section. For a specific calculation process, refer to the prior art. Details are not described in this embodiment of this application.

The to-be-sent data may be divided into the N data sections in the foregoing manner. Particularly, if data symbols included in all time windows in a present alternating current cycle cannot carry the entire to-be-sent data, in other words, the to-be-sent data cannot be completely transmitted in the present alternating current cycle, and there is remaining data, the remaining data may be transmitted in a next alternating current cycle. For a specific transmission method, refer to the power line channel-based data frame transmission method in this embodiment of this application.

S502: The sending node sends the data frame in the N time windows.

Each of the N data sections included in the data frame is transmitted in a corresponding time window. A power line channel corresponding to the $i^{th}$ time window is used to transmit the $i^{th}$ data section.

S503: The receiving node receives the data frame.

For a specific description of the data frame, refer to a detailed description in S501. Details are not described again in this embodiment of this application.

S504: The receiving node parses the data frame, to obtain data transmitted through the data frame.

After receiving the data frame, the receiving node parses the data frame to obtain the data in the data frame. First, the receiving node parses the header of the data frame to obtain the first indication information and the second indication information. The receiving node may learn, based on the first indication information, that the data frame is the channel-adaptive aggregated data frame, in other words, the data frame is the data frame including the plurality of data sections, and the plurality of data sections can be continuously transmitted on the power line channels in the plurality of different channel states. Then, the receiving node parses the payload of the data frame based on the parsing parameter that is used to parse the payload and that is included in the second indication information.

In a possible implementation, the parsing parameter includes the quantity of data sections, the quantity of data symbols actually used to carry each data section, the identifier of the physical layer transmission parameter that is used to transmit each data section in the time window, the quantity of transition sections, and the quantity of transition symbols actually used for each transition section. In this way, the receiving node can parse the data frame based on the parsing parameter, to obtain data. If a network is abnormal, the receiving node may not successfully receive all of the data sections. Therefore, the receiving node may determine, based on the quantity that is of data sections and that is included in the header symbol, whether all the data sections are successfully received. It should be noted that, if the transition section includes the transition symbol, the parsing parameter may include the quantity of transition sections and the quantity of transition symbols actually used for each transition section. If the transition section is the transition duration, the parsing parameter may not include the quantity of transition sections and the quantity of transition symbols actually used for each transition section, but the quantity of data sections, the quantity of data symbols actually used to carry each data section, the identifier of the physical layer transmission parameter that is used to transmit each data section in the time window, the quantity of transition sections, and transition duration actually used for each transition section.

In another possible implementation, the parsing parameter includes the start moment for sending the data frame. In this case, the receiving node first subtracts a length of the header from a length that is of the data frame and that is obtained by parsing the header, to obtain a length of the payload. A length may be understood as a quantity of symbols. The length of the payload is a sum of a quantity of data symbols and a quantity of transition symbols. A quantity of preamble symbols in the length of the header is predefined by the sending node and the receiving node. In other words, both the sending node and the receiving node have learned the quantity of preamble symbols. The receiving node may learn a length of the header symbol and a length of the additional channel estimation symbol by parsing the header. It should be noted that the header may not include the additional channel estimation symbol. In this case, the receiving node may subtract a length of the preamble symbol and the length of the header symbol from the length of the data frame to obtain the length of the payload. Because the receiving node knows an end moment of each time window, the receiving node may determine, according to a preset rule, the quantity of data sections, the quantity of data symbols actually used to carry each data section, the quantity of transition sections, and the quantity of transition symbols actually used for each transition section. The receiving node may parse the data frame based on the quantity of data sections, the quantity of data symbols actually used to carry each data section, the quantity of transition sections, and the quantity of transition symbols actually used for each transition section, to obtain the data. The preset rule may be: A time window for transmitting the $i^{th}$ data section is determined based on an intersection point between a data symbol and a start moment or an end moment of a time window. For example, more than 50% of data on a data symbol is transmitted in a preceding time window, and less than 50% of the data is transmitted in a following time window. Then, it is considered that the intersection point is an end moment of the time window, and it may be determined that a plurality of data symbols are transmitted in the time window. By analogy, the receiving node finally obtains the quantity of data sections, the quantity of data symbols actually used to carry each data section, the quantity of transition sections, and the quantity of transition symbols actually used for each transition section. Alternatively, the receiving node may obtain duration of the first time window based on the start moment for sending the data frame and an end moment of the first time window. Next, the receiving node may obtain duration for transmitting the first data section in the first time window by subtracting the duration of the header from the duration of the first time window. Then, the receiving node may obtain a total quantity of data symbols transmitted in the first time window by dividing the duration for transmitting the first data section by duration for transmitting one data symbol for the first data section. The receiving node further knows a quantity of transition symbols included in the first transition section, and may obtain duration of the first transition section based on the quantity of transition symbols included in the first transition section. A start moment of the second time window is a moment after the duration of the first time window and the duration of the first transition section from the network time reference. Then, the receiving node may obtain the total quantity of data symbols transmitted in the first time window according to the foregoing method. By analogy, the receiving node finally obtains the quantity of data sections, the quantity of data symbols actually used to carry each data section, the quantity of transition sections, and the quantity of transition symbols actually used for each transition section. Finally, the receiving node demodulates the data sections based on the physical layer transmission parameters for the time windows corresponding to the data sections.

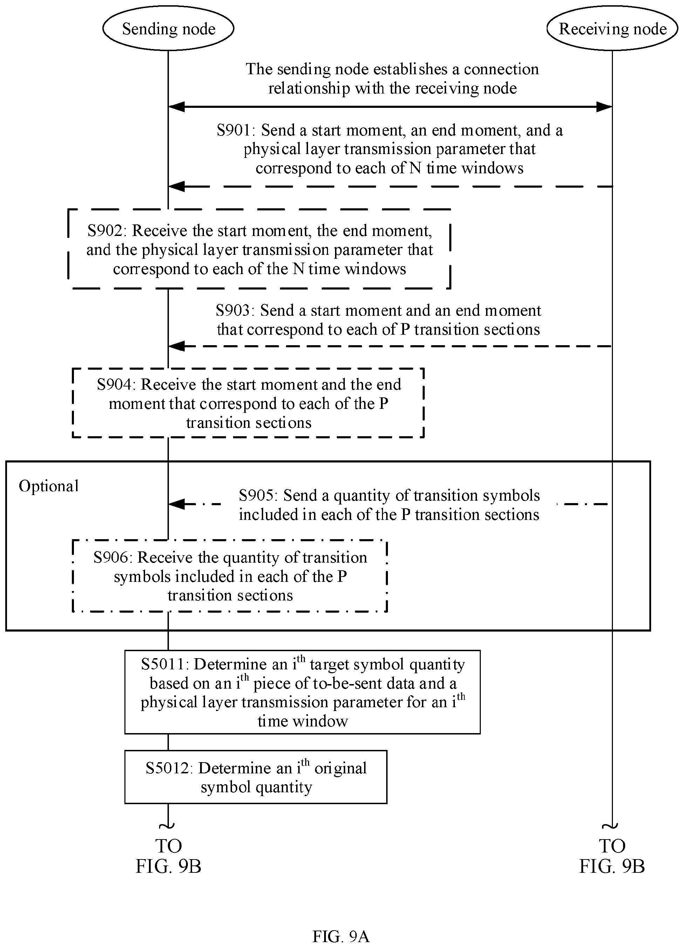

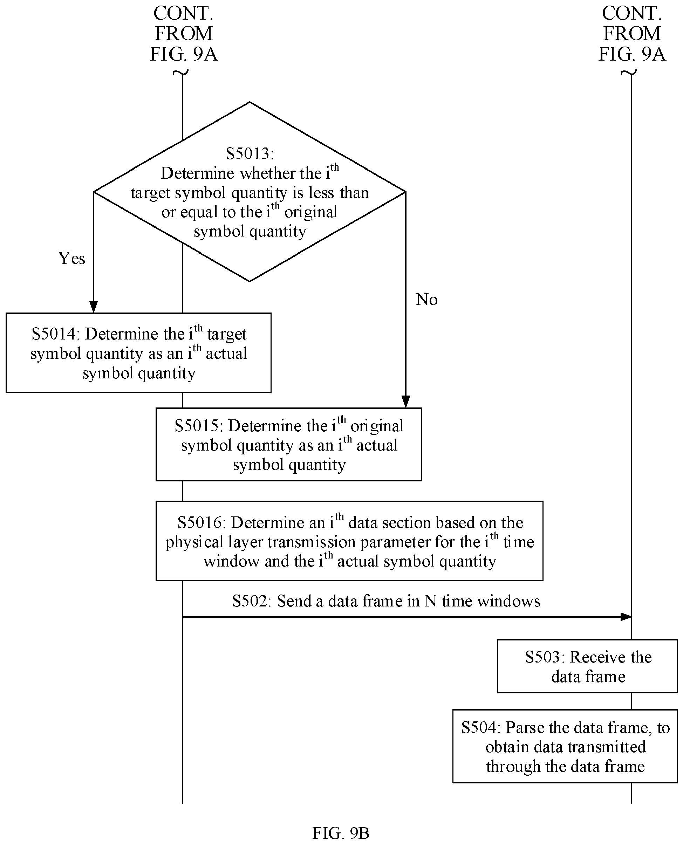

Further, after the sending node and the receiving node establish a connection relationship, the receiving node may directly send, to the sending node, the start moment, the end moment, and the physical layer transmission parameter that correspond to each of the N time windows. The sending node does not need to send any request message to the receiving node to obtain the start moment, the end moment, and the physical layer transmission parameter that correspond to each of the N time windows. Certainly, the sending node also needs to send, to the receiving node, a start moment, an end moment, and a physical layer transmission parameter that correspond to a time window. Therefore, when the receiving node needs to send data to the sending node, the receiving node may process the to-be-sent data based on the start moment, the end moment, and the physical layer transmission parameter that correspond to the time window. As shown in FIG. 9A and FIG. 9B, this embodiment of this application further includes the following steps.

S901: The receiving node sends the start moment, the end moment, and the physical layer transmission parameter that correspond to each of the N time windows.

The receiving node may determine, according to a channel estimation protocol (Channel Estimation Protocol) in the prior art, the start moment, the end moment, and the physical layer transmission parameter that correspond to each time window, and a quantity of time windows; and send, to the sending node, the start moment, the end moment, and the physical layer transmission parameter that correspond to each of the N time windows.

S902: The sending node receives the start moment, the end moment, and the physical layer transmission parameter that correspond to each of the N time windows.

After receiving the start moment, the end moment, and the physical layer transmission parameter that correspond to each of the N time windows, the sending node may process the to-be-sent data based on the start moment, the end moment, and the physical layer transmission parameter that correspond to each of the N time windows, to generate the data frame.

Optionally, the sending node may not use the start moment, the end moment, and the physical layer transmission parameter that correspond to each of the N time windows and that are sent by the receiving node. It may be understood that, the sending node and the receiving node may predetermine the start moment, the end moment, and the physical layer transmission parameter that correspond to each of the N time windows. The sending node processes the to-be-sent data based on the start moment, the end moment, and the physical layer transmission parameter that correspond to each of the N time windows and that are predetermined, to generate the data frame. The physical layer transmission parameter that is for the time window used for transmitting each data section and that is included in the parsing parameter may be the predetermined physical layer transmission parameter for each of the N time windows.

Before generating the data frame, the sending node further needs to obtain the P transition sections. After the sending node and the receiving node establish the connection relationship, when the receiving node directly sends, to the sending node, the start moment, the end moment, and the physical layer transmission parameter that correspond to each of the N time windows, the receiving node may also send, to the sending node, start moments and end moments that correspond to the P transition sections. The sending node does not need to send any request message to the receiving node to obtain the P transition sections. As shown in FIG. 9A and FIG. 9B, this embodiment of this application further includes the following steps.

S903: The receiving node sends a start moment and an end moment that correspond to each of P transition sections.

S904: The sending node receives the start moment and the end moment that correspond to each of P transition sections.

After receiving the start moments and the end moments that correspond to the P transition sections, the sending node may determine the transition duration of the $j^{th}$ transition section based on the start moment and the end moment that correspond to the $j^{th}$ transition section. Transition duration is used to indicate duration between two adjacent time windows. A quantity of transition symbols included in the $j^{th}$ transition section is determined by the $j^{th}$ transition duration.

Optionally, after the sending node and the receiving node establish the connection relationship, the receiving node may not perform S903 and S904, but directly send, to the sending node, the quantity of transition symbols included in each of the P transition sections. The sending node determines each of the P transition sections based on the quantity of transition symbols included in the transition section. As shown in FIG. 9A and FIG. 9B, this embodiment of this application further includes the following steps.

S905: The receiving node sends the quantity of transition symbols included in each of the P transition sections.

S906: The sending node receives the quantity of transition symbols included in each of the P transition sections.

According to the power line channel-based data frame transmission method provided in the embodiments of this application, data sections that can be transmitted in a plurality of time windows are aggregated into one data frame. Therefore, the data frame can be continuously transmitted across the time windows in different channel states while power line channel-adaptive communication is implemented. This reduces unnecessary redundant information and a quantity of data frames that need to be sent, and effectively improves utilization of the power line channel. In addition, a transition symbol is introduced into the data frame. This avoids a bit error caused by power line channel instability due to power line channel transfer in cross-window transmission, and ensures stability and accuracy of communication.

The foregoing mainly describes the solutions provided in the embodiments of this application from a perspective of interaction between the network elements. It may be understood that, to implement the foregoing functions, the network elements such as the sending node and the receiving node include corresponding hardware structures and/or software modules for performing the functions. A person skilled in the art should easily be aware that, in combination with the examples described in the embodiments disclosed in this specification, algorithms steps can be implemented by hardware or a combination of hardware and computer software in this application. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

In the embodiments of this application, the sending node and the receiving node may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. In actual implementation, another division manner may be used.

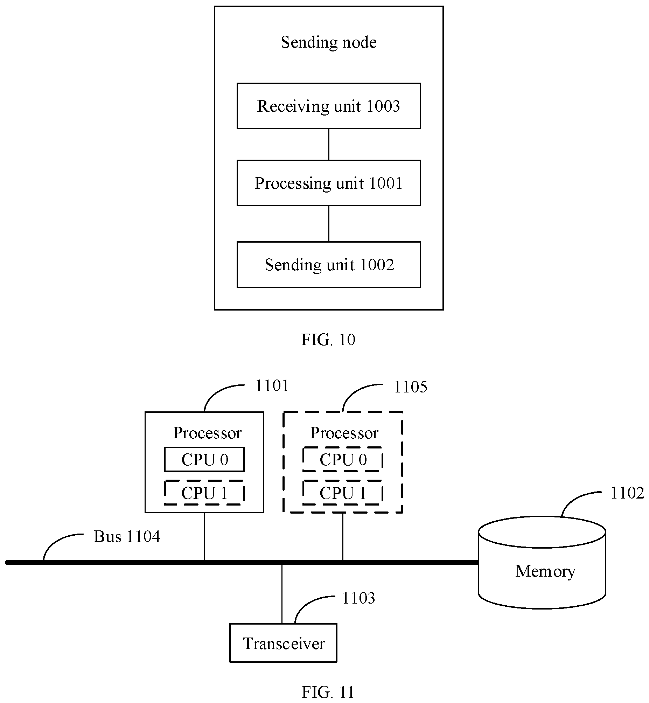

When each functional module is obtained through division based on each corresponding function, FIG. 10 is a schematic diagram of possible composition of the sending node in the foregoing embodiments. The sending node can perform steps performed by the sending node in any one of the method embodiments of this application. As shown in FIG. 10, the sending node may include a processing unit 1001 and a sending unit 1002.

The processing unit 1001 is configured to support the sending node in performing S501 in the power line channel-based data frame transmission method shown in FIG. 5, S5011 to S5016 in the power line channel-based data frame transmission method shown in FIG. 7, and S5011 to S5016 in the power line channel-based data frame transmission method shown in FIG. 9A and FIG. 9B.

The sending unit 1002 is configured to support the sending node in performing S502 in the power line channel-based data frame transmission method shown in FIG. 5, S502 in the power line channel-based data frame transmission method shown in FIG. 7, and S502 in the power line channel-based data frame transmission method shown in FIG. 9A and FIG. 9B.

In this embodiment of this application, as shown in FIG. 10, the sending node may further include a receiving unit 1003.

The receiving unit 1003 is configured to support the sending node in performing S902 and S904, or S902 and S906 in the power line channel-based data frame transmission method shown in FIG. 9A and FIG. 9B.

It should be noted that all related content of the steps in the foregoing method embodiments may be cited in function descriptions of corresponding functional modules. Details are not described herein again.

The sending node provided in this embodiment of this application is configured to perform the foregoing power line channel-based data frame transmission method, and therefore can achieve a same effect as the foregoing power line channel-based data frame transmission method.

FIG. 11 is a schematic diagram of composition of a communication apparatus according to an embodiment of this application. As shown in FIG. 11, the communication apparatus may include at least one processor 1101, a memory 1102, a transceiver 1103, and a communication bus 1104.

The following describes the components of the communication apparatus in detail with reference to FIG. 11.

The processor 1101 is a control center of the communication apparatus, and may be one processor or may be a collective name of a plurality of processing elements. During specific implementation, in an embodiment, the processor 1101 may include one or more central processing units (central processing unit, CPU), for example, a CPU 0 and a CPU 1 shown in FIG. 11. The processor 1101 may alternatively be an application-specific integrated circuit (application specific integrated circuit, ASIC), or may be configured as one or more integrated circuits implementing the embodiments of this application, for example, one or more microprocessors (digital signal processor, DSP) or one or more field programmable gate arrays (field programmable gate array, FPGA).

For example, the processor 1101 is one or more CPUs. The processor 1101 may run or execute a software program stored in the memory 1102 in the communication apparatus, and invoke data stored in the memory 1102, to perform various functions of the communication apparatus.

During specific implementation, in an embodiment, the communication apparatus may include a plurality of processors, for example, the processor 1101 and a processor 1105 shown in FIG. 11. Each of the processors may be a single-core (single-CPU) processor or may be a multicore (multi-CPU) processor. The processor herein may be one or more devices, circuits, and/or processing cores for processing data (for example, a computer program instruction).

In this embodiment of this application, the processor is mainly configured to generate a data frame and parse the data frame.

The memory 1102 may be a read-only memory (read-only memory, ROM) or another type of static storage device that can store static information and an instruction, or a random access memory (random access memory, RAM) or another type of dynamic storage device that can store information and an instruction. Alternatively, the memory 1102 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory 1102 is not limited thereto. The memory 1102 may exist independently, and be connected to the processor 1101 through the communication bus 1104. Alternatively, the memory 1102 may be integrated with the processor 1101.

The memory 1102 is configured to store a software program for performing the solutions of this application, and the processor 1101 controls execution of the software program. The memory 1102 is further configured to store the data frame.

The transceiver 1103 is configured to communicate with another device or communication network, and may be configured to implement a function of a receiving unit and a function of a sending unit.

The communication bus 1104 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, the bus 1104 is indicated by using only one thick line in FIG. 11, but this does not mean that there is only one bus or only one type of bus.

A device structure shown in FIG. 11 constitutes no limitation on the communication apparatus. The communication apparatus may include more or fewer components than those shown in the figure, or combine some components, or have different component arrangements.

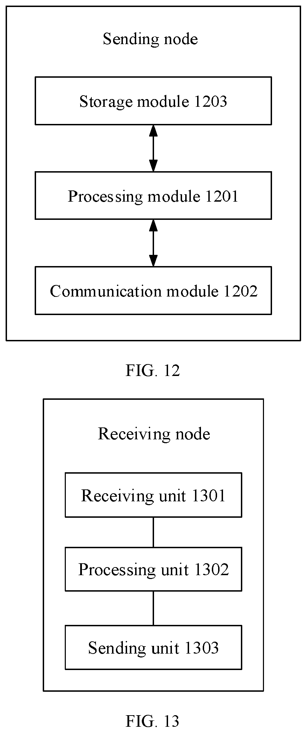

When an integrated unit is used, FIG. 12 is a schematic diagram of other possible composition of the sending node in the foregoing embodiments. The sending node can perform steps performed by the sending node in any one of the method embodiments of this application. As shown in FIG. 12, the sending node includes a processing module 1201 and a communication module 1202.

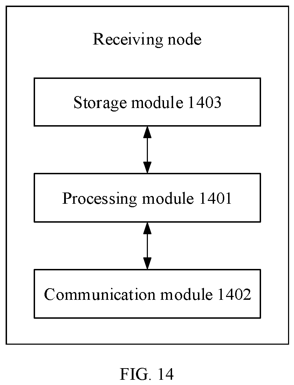

The processing module 1201 is configured to control and manage an action of the sending node. For example, the processing module 1201 is configured to support the sending node in performing S501 in FIG. 5, S5011 to S5016 in FIG. 7, and S5011 to S5016 in FIG. 9A and FIG. 9B, and/or is configured to perform another process of the technology described in this specification. The communication module 1202 is configured to support the sending node in communicating with another network entity, for example, a functional module or a network entity shown in FIG. 13 and FIG. 14. Specifically, the communication module 1202 is configured to support the sending node in performing S502 in FIG. 5, FIG. 7, and FIG. 9A and FIG. 9B. The sending node may further include a storage module 1203, configured to store program code and data that are of the sending node.

The processing module 1201 may be a processor or a controller. The processing module 1201 may implement or execute various example logical blocks, modules, and circuits described with reference to content disclosed in this application. The processor may be a combination implementing a computing function, for example, a combination of one or more microprocessors, or a combination of a DSP and a microprocessor. The communication module 1202 may be a transceiver, a transceiver circuit, a communication interface, or the like. The storage module 1203 may be a memory.

When the processing module 1201 is the processor, the communication module 1202 is the transceiver, and the storage module 1203 is the memory, the sending node in this embodiment of this application may be the communication apparatus shown in FIG. 11.

When each functional module is obtained through division based on each corresponding function, FIG. 13 is a schematic diagram of possible composition of the receiving node in the foregoing embodiments. The receiving node can perform steps performed by the receiving node in any one of the method embodiments of this application. As shown in FIG. 13, the receiving node may include a receiving unit 1301 and a processing unit 1302.

The receiving unit 1301 is configured to support the receiving node in performing S503 in the power line channel-based data frame transmission method shown in FIG. 5, S503 in the power line channel-based data frame transmission method shown in FIG. 7, and S503 in the power line channel-based data frame transmission method shown in FIG. 9A and FIG. 9B.

The processing unit 1302 is configured to support the receiving node in performing S504 in the power line channel-based data frame transmission method shown in FIG. 5, S504 in the power line channel-based data frame transmission method shown in FIG. 7, and S504 in the power line channel-based data frame transmission method shown in FIG. 9A and FIG. 9B.

In this embodiment of this application, as shown in FIG. 13, the receiving node may further include a sending unit 1303.

The sending unit 1303 is configured to support the sending node in performing S901 and S903, or S901 and S905 in the power line channel-based data frame transmission method shown in FIG. 9A and FIG. 9B.

It should be noted that all related content of the steps in the foregoing method embodiments may be cited in function descriptions of corresponding functional modules. Details are not described herein again.

The receiving node provided in this embodiment of this application is configured to perform the foregoing power line channel-based data frame transmission method, and therefore can achieve a same effect as the foregoing power line channel-based data frame transmission method.

When an integrated unit is used, FIG. 14 is a schematic diagram of other possible composition of the receiving node in the foregoing embodiments. The receiving node can perform steps performed by the receiving node in any one of the method embodiments of this application. As shown in FIG. 14, the receiving node includes a processing module 1401 and a communication module 1402.

The processing module 1401 is configured to control and manage an action of the receiving node. For example, the processing module 1401 is configured to support the receiving node in performing S504 in FIG. 5, FIG. 7, and in FIG. 9A and FIG. 9B, and/or is configured to perform another process of the technology described in this specification. The communication module 1402 is configured to support the receiving node in communicating with another network entity, for example, a functional module or a network entity shown in FIG. 10 and FIG. 12. Specifically, the communication module 1402 is configured to support the receiving node in performing S503 in FIG. 5, FIG. 7, and FIG. 9A and FIG. 9B. The receiving node may further include a storage module 1403, configured to store program code and data that are of the receiving node.

The processing module 1401 may be a processor or a controller. The processing module 1401 may implement or execute various example logical blocks, modules, and circuits described with reference to content disclosed in this application. The processor may be a combination implementing a computing function, for example, a combination of one or more microprocessors, or a combination of a DSP and a microprocessor. The communication module 1402 may be a transceiver, a transceiver circuit, a communication interface, or the like. The storage module 1403 may be a memory.

When the processing module 1401 is the processor, the communication module 1402 is the transceiver, and the storage module 1403 is the memory, the receiving node in this embodiment of this application may be the communication apparatus shown in FIG. 11.

The foregoing descriptions about implementations allow a person skilled in the art to understand that, for ease of description and brevity, division into the foregoing functional modules is merely used as an example for description. During actual application, the foregoing functions can be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place or may be distributed in a plurality of different places. Some or all of the units may be selected based on actual requirements, to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of the embodiments in this application essentially, or the part contributing to the prior art, or all or some of the technical solutions may be implemented in a form of a software product. The software product is stored in a storage medium, and includes several instructions for instructing a device (which may be a single-chip microcomputer, a chip or the like) or a processor (processor) to perform all or some of the steps of the methods described in the embodiments of this application. The storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1.  A power line channel-based data frame transmission method, comprising:

    generating, by a sending node, a data frame, wherein the data frame comprises a header and a payload; the header comprises a header symbol, the header symbol comprises first indication information and second indication information, the first indication information is used to indicate that the data frame is a channel-adaptive aggregated data frame, and the second indication information comprises a parsing parameter used to parse the payload; the payload comprises N data sections, the N data sections are obtained by dividing to-be-sent data based on physical layer transmission parameters for N time windows, the N time windows belong to M regions, and each of the M regions corresponds to one physical layer transmission parameter; one region comprises at least one time window, and physical layer transmission parameters for two adjacent time windows are different, wherein N is an integer greater than or equal to 2, M is an integer greater than or equal to 1, and M is less than or equal to N; and
    sending, by the sending node, the data frame in the N time windows, wherein a power line channel corresponding to an $i^{th}$ time window is used to transmit an $i^{th}$ data section, i is an integer, and values of i range from 1 to N.

2.  The method according to claim 1, wherein the parsing parameter comprises a quantity of data sections, a quantity of data symbols actually used to carry each data section, and an identifier of a physical layer transmission parameter that is used to transmit each data section in a time window.

3.  The method according to claim 1, wherein the parsing parameter comprises a start moment for sending the data frame.

4.  The method according to any one of claims 1 to 3, wherein the payload further comprises P transition sections, each transition section is used to separate two adjacent time windows, and P is an integer greater than or equal to 1 and less than or equal to N-1.

5.  The method according to claim 4, wherein
    the $j^{th}$ transition section comprises a transition symbol, and the transition symbol comprised in the $j^{th}$ transition section is a silent symbol, or is a dummy symbol using pseudo-random data, or is a data symbol that is for carrying a data section and that is in a time window adjacent to the $j^{th}$ transition section, wherein j is an integer, and values of j range from 1 to P; or
    the $j^{th}$ transition section is transition duration.

6.  The method according to claim 5, wherein the parsing parameter further comprises a quantity of transition sections and a quantity of transition symbols actually used for each transition section; or
    the parsing parameter further comprises a quantity of transition sections and transition duration actually used for each transition section.

7.  The method according to any one of claims 4 to 6, wherein before the generating, by a sending node, a data frame, the method further comprises:

    obtaining, by the sending node, a start moment and an end moment that correspond to each of the P transition sections; or
    obtaining, by the sending node, a quantity of transition symbols comprised in each of the P transition sections.

8.  The method according to any one of claims 1 to 7, wherein before the generating, by a sending node, a data frame, the method further comprises:
    obtaining, by the sending node, a start moment, an end moment, and a physical layer transmission parameter that correspond to each of the N time windows.

9.  The method according to any one of claims 1 to 8, wherein before the generating, by a sending node, a data frame, the method further comprises:

determining, by the sending node, an $i^{th}$ target symbol quantity based on an $i^{th}$ piece of to-be-sent data and a physical layer transmission parameter for the $i^{th}$ time window, wherein the $i^{th}$ piece of to-be-sent data is the to-be-sent data or a part of the to-be-sent data, and the $i^{th}$ target symbol quantity is a quantity of data symbols that need to be used to carry the $i^{th}$ piece of to-be-sent data when the sending node sends the $i^{th}$ piece of to-be-sent data;

determining, by the sending node, an $i^{th}$ original symbol quantity, wherein the $i^{th}$ original symbol quantity is a quantity of data symbols that can be transmitted in duration from a start moment for sending the $i^{th}$ piece of to-be-sent data to an end moment of the $i^{th}$ time window;

determining, by the sending node, whether the $i^{th}$ target symbol quantity is less than or equal to the $i^{th}$ original symbol quantity;

if the $i^{th}$ target symbol quantity is less than or equal to the $i^{th}$ original symbol quantity, determining, by the sending node, the $i^{th}$ target symbol quantity as an $i^{th}$ actual symbol quantity, wherein the $i^{th}$ actual symbol quantity is a quantity of data symbols actually used to carry the $i^{th}$ data section when the $i^{th}$ data section is sent; or if the $i^{th}$ target symbol quantity is greater than the $i^{th}$ original symbol quantity, determining, by the sending node, the $i^{th}$ original symbol quantity as the $i^{th}$ actual symbol quantity; and determining, by the sending node, the $i^{th}$ data section based on the $i^{th}$ actual symbol quantity and the physical layer transmission parameter for the $i^{th}$ time window.

10. The method according to claim 9, wherein the determining, by the sending node, an $i^{th}$ original symbol quantity specifically comprises:

obtaining, by the sending node, the start moment for sending the $i^{th}$ piece of to-be-sent data and the end moment of the $i^{th}$ time window;

obtaining, by the sending node, available duration for sending the $i^{th}$ piece of to-be-sent data, wherein the available duration for sending the $i^{th}$ piece of to-be-sent data is a difference between the start moment for sending the $i^{th}$ piece of to-be-sent data and the end moment of the $i^{th}$ time window; and

determining, by the sending node, the $i^{th}$ original symbol quantity based on the available duration for sending the $i^{th}$ piece of to-be-sent data and duration of a data symbol, wherein the data symbol is a symbol that is for transmitting the $i^{th}$ piece of to-be-sent data and that is in the $i^{th}$ time window.

11. The method according to claim 10, wherein when i = 1, the determining, by the sending node, the $i^{th}$ original symbol quantity based on the available duration for sending the $i^{th}$ piece of to-be-sent data and duration of a data symbol specifically comprises: determining, by the sending node, the $i^{th}$ original symbol quantity based on the available duration for sending the $i^{th}$ piece of to-be-sent data, duration for sending the header, and the duration of the data symbol.

12. A power line channel-based data frame transmission method, comprising:

receiving, by a receiving node, a data frame, wherein the data frame comprises a header and a payload; the header comprises a header symbol, the header symbol comprises first indication information and second indication information, the first indication information is used to indicate that the data frame is a channel-adaptive aggregated data frame, and the second indication information comprises a parsing parameter used to parse the payload; the payload comprises N data sections, the N data sections are obtained by dividing to-be-sent data based on physical layer transmission parameters for N time windows, the N time windows belong to M regions, and each of the M regions corresponds to one physical layer transmission parameter; one region comprises at least one time window, and physical layer transmission parameters for two adjacent time windows are different, wherein N is an integer greater than or equal to 2, M is an integer greater than or equal to 1, and M is less than or equal to N; and

parsing, by the receiving node, the data frame, to obtain data transmitted through the data frame.

13. The method according to claim 12, wherein the parsing parameter comprises a quantity of data sections, a quantity of data symbols actually used to carry each data section, and an identifier of a physical layer transmission parameter that is used to transmit each data section in a time window.

14. The method according to claim 12, wherein the parsing parameter comprises a start moment for sending the data frame.

15. The method according to any one of claims 12 to 14, wherein the payload further comprises P transition sections, each transition section is used to separate two adjacent time windows, and P is an integer greater than or equal to 1 and less than or equal to N-1.

16. The method according to claim 15, wherein the $j^{th}$ transition section comprises a transition symbol, and the transition symbol comprised in the $j^{th}$ transition section is a silent symbol, or is a dummy symbol using pseudo-random data, or is a data symbol that is for carrying a data section and that is in a time window adjacent to the $j^{th}$ transition section, wherein j is an integer, and values of j range from 1 to P; or the $j^{th}$ transition section is transition duration.

17. The method according to claim 16, wherein the parsing parameter further comprises a quantity of transition sections and a quantity of transition symbols actually used for each transition section; or the parsing parameter further comprises a quantity of transition sections and transition duration actually used for each transition section.

18. The method according to any one of claims 15 to 17, wherein before the receiving, by a receiving node, a data frame, the method further comprises:

sending, by the receiving node, a start moment and an end moment that correspond to each of the P transition sections; or
sending, by the receiving node, a quantity of transition symbols comprised in each of the P transition sections.

19. The method according to any one of claims 12 to 18, wherein before the receiving, by a receiving node, a data frame, the method further comprises:
sending, by the receiving node, a start moment, an end moment, and a physical layer transmission parameter that correspond to each of the N time windows.

20. A sending node, comprising:

a processing unit, configured to: generate a data frame, wherein the data frame comprises a header and a payload; the header comprises a header symbol, the header symbol comprises first indication information and second indication information, the first indication information is used to indicate that the data frame is a channel-adaptive aggregated data frame, and the second indication information comprises a parsing parameter used to parse the payload; the payload comprises N data sections, the N data sections are obtained by dividing to-be-sent data based on physical layer transmission parameters for N time windows, the N time windows belong to M regions, and each of the M regions corresponds to one physical layer transmission parameter; one region comprises at least one time window, and physical layer transmission parameters for two adjacent time windows are different, wherein N is an integer greater than or equal to 2, M is an integer greater than or equal to 1, and M is less than or equal to N; and
a sending unit, configured to send the data frame in the N time windows, wherein a power line channel corresponding to an $i^{th}$ time window is used to transmit an $i^{th}$ data section, i is an integer, and values of i range from 1 to N.

21. The sending node according to claim 20, wherein the parsing parameter comprises a quantity of data sections, a quantity of data symbols actually used to carry each data section, and an identifier of a physical layer transmission parameter that is used to transmit each data section in a time window.

22. The sending node according to claim 20, wherein the parsing parameter comprises a start moment for sending the data frame.

23. The sending node according to any one of claims 20 to 22, wherein the payload further comprises P transition sections, each transition section is used to separate two adjacent time windows, and P is an integer greater than or equal to 1 and less than or equal to N-1.

24. The sending node according to claim 23, wherein the $j^{th}$ transition section comprises a transition symbol, and the transition symbol comprised in the $j^{th}$ transition section is a silent symbol, or is a dummy symbol using pseudo-random data, or is a data symbol that is for carrying a data section and that is in a time window adjacent to the $j^{th}$ transition section, wherein j is an integer, and values of j range from 1 to P; or the $j^{th}$ transition section is transition duration.

25. The sending node according to claim 24, wherein the parsing parameter further comprises a quantity of transition sections and a quantity of transition symbols actually used for each transition section; or the parsing parameter further comprises a quantity of transition sections and transition duration actually used for each transition section.

26. A receiving node, comprising:

a receiving unit, configured to: receive a data frame, wherein the data frame comprises a header and a payload; the header comprises a header symbol, the header symbol comprises first indication information and second indication information, the first indication information is used to indicate that the data frame is a channel-adaptive aggregated data frame, and the second indication information comprises a parsing parameter used to parse the payload; the payload comprises N data sections, the N data sections are obtained by dividing to-be-sent data based on physical layer transmission parameters for N time windows, the N time windows belong to M regions, and each of the M regions corresponds to one physical layer transmission parameter; one region comprises at least one time window, and physical layer transmission parameters for two adjacent time windows are different, wherein N is an integer greater than or equal to 2, M is an integer greater than or equal to 1, and M is less than or equal to N; and

a processing unit, configured to parse the data frame, to obtain data transmitted through the data frame.

27. A communication apparatus, comprising at least one processor, a memory, a bus, and a transceiver, wherein the memory is configured to store a computer program, and when the computer program is executed by the at least one processor, the power line channel-based data frame transmission method according to any one of claims 1 to 11 or according to any one of claims 12 to 19 is implemented.

28. A computer storage medium, wherein the computer storage medium stores a computer program, and when the program is executed by a processor, the power line channel-based data frame transmission method according to any one of claims 1 to 11 or according to any one of claims 12 to 19 is implemented.

29. A computer program product comprising an instruction, wherein when the computer program product runs on a sending node or on a chip disposed in a sending node, the sending node is enabled to perform the method according to any one of claims 1 to 11.

30. A computer program product comprising an instruction, wherein when the computer program product runs on a receiving node or on a chip disposed in a receiving node, the receiving node is enabled to perform the method according to any one of claims 12 to 19.

FIG. 1

Zero-crossing and rising edge of an alternating current power line cycle

T1   T2   T1   T2   T1   T2   T1   T2

2T

Alternating current power cycle

MAC cycle

FIG. 2

| Preamble symbol | Header symbol | Additional channel estimation symbol | Payload |
|---|---|---|---|

Header

FIG. 3

Wi-Fi AP | AP | Wi-Fi AP

Home network
device 3

Home network
device 4

Home network
device 5

Operator
network

Optical network
terminal or
digital subscriber
line modem

Home network
device used as a
domain master node

Home network
device 1

Home network
device 2

——————— Home power line

— — — Ethernet cable

— · — Optical fiber or
copper cable

FIG. 4

Sending
node

Receiving
node

S501: Generate a
data frame

S502: Send the data frame in N time windows

S503: Receive the
data frame

S504: Parse the data frame,
to obtain data transmitted
through the data frame

FIG. 5

FIG. 6(a)

FIG. 6(b)

Sending node

Receiving node

S5011: Determine an $i^{th}$ target symbol quantity based on an $i^{th}$ piece of to-be-sent data and a physical layer transmission parameter for an $i^{th}$ time window

S5012: Determine an $i^{th}$ original symbol quantity

S5013: Determine whether the $i^{th}$ target symbol quantity is less than or equal to the $i^{th}$ original symbol quantity

Yes

No

S5014: Determine the $i^{th}$ target symbol quantity as an $i^{th}$ actual symbol quantity

S5015: Determine the $i^{th}$ original symbol quantity as an $i^{th}$ actual symbol quantity

S5016: Determine an $i^{th}$ data section based on the physical layer transmission parameter for the $i^{th}$ time window and the $i^{th}$ actual symbol quantity

S502: Send a data frame in N time windows

S503: Receive the data frame

S504: Parse the data frame, to obtain data transmitted through the data frame

FIG. 7

FIG. 8

Sending node          Receiving node

The sending node establishes a connection
relationship with the receiving node

S901: Send a start moment, an end moment, and a
physical layer transmission parameter that
correspond to each of N time windows

S902: Receive the start moment, the end moment,
and the physical layer transmission parameter that
correspond to each of the N time windows

S903: Send a start moment and an end moment
that correspond to each of P transition sections

S904: Receive the start moment and the end
moment that correspond to each of the P
transition sections

Optional

S905: Send a quantity of transition symbols
included in each of the P transition sections

S906: Receive the quantity of transition
symbols included in each of the P
transition sections

S5011: Determine an $i^{th}$ target symbol quantity
based on an $i^{th}$ piece of to-be-sent data and a
physical layer transmission parameter for an $i^{th}$
time window

S5012: Determine an $i^{th}$ original
symbol quantity

TO
FIG. 9B

TO
FIG. 9B

FIG. 9A

CONT.
FROM
FIG. 9A

CONT.
FROM
FIG. 9A

S5013:
Determine whether the $i^{th}$
target symbol quantity is less than
or equal to the $i^{th}$ original
symbol quantity

Yes

No

S5014: Determine the $i^{th}$ target
symbol quantity as an $i^{th}$ actual
symbol quantity

S5015: Determine the $i^{th}$ original
symbol quantity as an $i^{th}$ actual
symbol quantity

S5016: Determine an $i^{th}$ data section based on the
physical layer transmission parameter for the $i^{th}$ time
window and the $i^{th}$ actual symbol quantity

S502: Send a data frame in N time windows

S503: Receive the
data frame

S504: Parse the data frame, to
obtain data transmitted
through the data frame

FIG. 9B

Sending node

Receiving unit 1003

Processing unit 1001

Sending unit 1002

FIG. 10

1101          1105

Processor          Processor

CPU 0          CPU 0

CPU 1          CPU 1

1102

Bus 1104

Memory

1103

Transceiver

FIG. 11

Sending node

Storage module 1203

⇕

Processing module 1201

⇕

Communication module 1202

FIG. 12

Receiving node

Receiving unit 1301

Processing unit 1302

Sending unit 1303

FIG. 13

Receiving node

Storage module 1403

Processing module 1401

Communication module 1402

FIG. 14

## INTERNATIONAL SEARCH REPORT

| | International application No. |
|---|---|
| | **PCT/CN2018/088507** |

**A. CLASSIFICATION OF SUBJECT MATTER**

H04B 3/54(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP; IEEE: 参数, 指示, 电力线信道, 载荷, 电力线, 解析, 信道, 时间窗, 帧, 帧头, 聚合, 信道, 窗, 区域, 帧格式, power line communication, PLC, frame, header, channel, time window, window, payload

**C. DOCUMENTS CONSIDERED TO BE RELEVANT**

| Category* | Citation of document, with indication, where appropriate, of the relevant passages | Relevant to claim No. |
|---|---|---|
| A | CN 101796788 A (PANASONIC CORPORATION) 04 August 2010 (2010-08-04) description, paragraphs 78-86 and 102-121, and figures 2A, 2B, 7 and 11 | 1-30 |
| A | CN 101729089 A (MIARTECH (SHANGHAI), INC.) 09 June 2010 (2010-06-09) description, paragraphs 47-51, and figures 1 and 2 | 1-30 |
| A | CN 103647742 A (SHANGHAI BELLING CO., LTD.) 19 March 2014 (2014-03-19) description, paragraphs 42-58 | 1-30 |
| A | CN 1518803 A (DISEYO DE SISTEMAS EN SILICIO, S.A.) 04 August 2004 (2004-08-04) entire description | 1-30 |
| A | LIU, Kuanhung et al. ""Troughput Improvement for Power Line Communication by Adaptive MAC Protocol"" *IEEE PEOCO2012*, 07 June 2012 (2012-06-07), pp. 135-140 | 1-30 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 February 2019** | **28 February 2019** |

| Name and mailing address of the ISA/CN | Authorized officer |
|---|---|
| State Intellectual Property Office of the P. R. China No. 6, Xitucheng Road, Jimenqiao Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/088507**

| Patent document cited in search report | | | Publication date (day/month/year) | Patent family member(s) | | | Publication date (day/month/year) |
|---|---|---|---|---|---|---|---|
| CN | 101796788 | A | 04 August 2010 | JP | 5382877 | B2 | 08 January 2014 |
| | | | | EP | 2193640 | A2 | 09 June 2010 |
| | | | | CN | 101796788 | B | 16 November 2016 |
| | | | | JP | 2010538501 | A | 09 December 2010 |
| | | | | WO | 2009028729 | A4 | 25 June 2009 |
| | | | | WO | 2009028729 | A3 | 30 April 2009 |
| | | | | US | 8325784 | B2 | 04 December 2012 |
| | | | | WO | 2009028729 | A2 | 05 March 2009 |
| | | | | US | 2009060061 | A1 | 05 March 2009 |
| CN | 101729089 | A | 09 June 2010 | CN | 101729089 | B | 10 July 2013 |
| CN | 103647742 | A | 19 March 2014 | CN | 103647742 | B | 08 September 2017 |
| CN | 1518803 | A | 04 August 2004 | KR | 20040004592 | A | 13 January 2004 |
| | | | | EP | 1388954 | A2 | 11 February 2004 |
| | | | | DE | 60225684 | D1 | 30 April 2008 |
| | | | | US | 2004136393 | A1 | 15 July 2004 |
| | | | | ES | 2186531 | A2 | 01 May 2003 |
| | | | | CA | 2444397 | A1 | 31 October 2002 |
| | | | | AT | 389978 | T | 15 April 2008 |
| | | | | WO | 02087104 | A3 | 30 October 2003 |
| | | | | AU | 2002255011 | B2 | 18 January 2007 |
| | | | | US | 7460553 | B2 | 02 December 2008 |
| | | | | ES | 2186531 | R | 16 May 2003 |
| | | | | IL | 158370 | A | 01 September 2009 |
| | | | | WO | 02087104 | A2 | 31 October 2002 |
| | | | | JP | 2004531944 | A | 14 October 2004 |
| | | | | CN | 1309180 | C | 04 April 2007 |
| | | | | IL | 158370 | D0 | 12 May 2004 |
| | | | | EA | 005473 | B1 | 24 February 2005 |
| | | | | EP | 1388954 | B1 | 19 March 2008 |
| | | | | DE | 60225684 | T2 | 23 April 2009 |
| | | | | EA | 200301102 | A1 | 24 June 2004 |
| | | | | ES | 2302805 | T3 | 01 August 2008 |
| | | | | ES | 2186531 | B1 | 16 March 2005 |
| | | | | KR | 100814354 | B1 | 18 March 2008 |
| | | | | PT | 1388954 | E | 30 May 2008 |
| | | | | JP | 4302988 | B2 | 29 July 2009 |
| | | | | BR | 0209123 | A | 15 June 2004 |
| | | | | MX | PA03009501 | A | 06 December 2004 |

Form PCT/ISA/210 (patent family annex) (January 2015)